(19) Europäisches Patentamt
European Patent Office
Office européen des brevets

(11) EP 3 106 476 A1

(12) **EUROPEAN PATENT APPLICATION**
published in accordance with Art. 153(4) EPC

(43) Date of publication:
**21.12.2016 Bulletin 2016/51**

(21) Application number: **15749348.7**

(22) Date of filing: **03.02.2015**

(51) Int Cl.:
***C08F 8/32*** *(2006.01)* ***C08F 8/18*** *(2006.01)*
***C08F 212/14*** *(2006.01)* ***H01B 1/06*** *(2006.01)*
***H01M 4/86*** *(2006.01)* ***H01M 4/88*** *(2006.01)*
***H01M 8/02*** *(2006.01)* ***H01M 8/10*** *(2006.01)*
***C08J 5/22*** *(2006.01)*

(86) International application number:
**PCT/JP2015/052990**

(87) International publication number:
**WO 2015/122320 (20.08.2015 Gazette 2015/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.02.2014 JP 2014026795**

(71) Applicant: **Tokuyama Corporation**
**Shunan-shi, Yamaguchi-ken 745-8648 (JP)**

(72) Inventors:
- **ISOMURA, Takenori**
**Shunan-shi**
**Yamaguchi 745-8648 (JP)**
- **MATSUMURA, Yasunori**
**Shunan-shi**
**Yamaguchi 745-8648 (JP)**
- **HANASAKI, Taichi**
**Shunan-shi 745-8648 (JP)**

(74) Representative: **Schlief, Thomas P.**
**Canzler & Bergmeier**
**Patentanwälte Partnerschaft mbB**
**Friedrich-Ebert-Straße 84**
**85055 Ingolstadt (DE)**

# (54) PARTIALLY QUATERNIZED STYRENE-BASED COPOLYMER, IONIC-CONDUCTIVITY IMPARTER, CATALYTIC ELECTRODE LAYER, MEMBRANE/ELECTRODE ASSEMBLY AND PROCESS FOR PRODUCING SAME, GAS DIFFUSION ELECTRODE AND PROCESS FOR PRODUCING SAME, AND FUEL CELL OF ANION EXCHANGE MEMBRANE TYPE

(57) [Problem]

To provide an ionic-conductivity imparter for use in fuel cells each including an anion exchange membrane, the imparter keeping the ionic conductivity and the gas diffusion properties high and being capable of minimizing the swelling of the electrode catalyst layer in a post-crosslinking step to form a highly active catalytic electrode layer and obtain an excellent fuel-cell output.

[Solution]

A partially quaternized styrene-based polymer which contains given amounts of a constituent unit having a quaternary salt type anion-exchange group and a constituent unit having a haloalkyl group. Due to the polymer, the ionic conductivity and the gas diffusion properties are kept high and the swelling of the electrode catalyst layer in a post-crosslinking step can be minimized to form a highly active catalytic electrode layer and obtain an excellent fuel-cell output.

FIG. 1

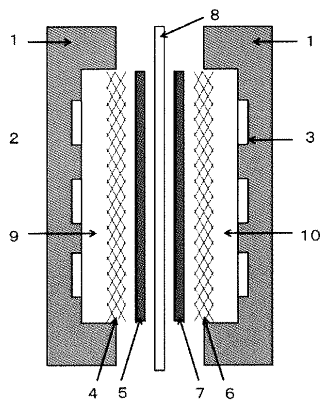




Printed by Jouve, 75001 PARIS (FR)

## Description

## TECHNICAL FIELD

The present invention relates to a novel partial quaternized styrene-based copolymer, an ion-conductive additive, a catalytic electrode layer and an anion-exchange membrane type fuel cell. The present invention also relates to a membrane-electrode assembly and the production method thereof, and a gas diffusion electrode and the production method thereof.

## DESCRIPTION OF THE RELATED ART

The fuel cell is the electric power generation system of which the chemical energy of the fuel is taken out as the electric power, and the fuel cells of several form has been proposed and examined such as an alkali type, a phosphoric acid type, a molten carbonate type, a solid electrolyte type and a solid polymer type or so. Among these, the solid polymer type fuel cell has particularly low operation temperature, thus it is expected to be a low temperature operation type fuel cell having a size of mid to small size used for stationary power source and for automobile or so.

This solid polymer fuel cell is the fuel cell which uses the solid polymer such as the ion-exchange membranes or so as the electrolytes. As for the solid polymer type fuel cell, as shown in Fig.1, the space inside the battery separator 1 comprising fuel flow channels 2 and oxidant flow channels 3 respectively connecting to the outside are separated by an membrane-electrode-assembly wherein a fuel chamber side catalytic electrode layer 5 and a fuel chamber side gas diffusion layer 4 are bonded to the fuel chamber side of the solid polymer electrolyte membrane 8 and a oxidant chamber side catalytic electrode layer 7 and a oxidant chamber side gas diffusion layer 6 are bonded to the oxidant chamber side of the solid polymer electrolyte membrane 8. Thereby, the solid polymer type fuel cell has a basic structure comprising a fuel chamber 9 connecting to the outside via the fuel flow channels 2, and an oxidant chamber 10 connecting to the outside via oxidant flow channels 3. Further, in the solid polymer type fuel cell having such basic structure, the fuel such as hydrogen gas or liquid such as alcohol or so is supplied to said fuel chamber 9 via the fuel flow channels 2, while supplying the oxygen comprising gas such as pure oxygen and air or so as the oxidant via the oxidant flow channels 3; and an external load circuit is connected between the fuel chamber side catalytic electrode layer 5 and the oxidant chamber side catalytic electrode layer 7; thereby the electric energy is generated by following described mechanism.

As for the solid polymer electrolyte membrane 8, the use of an anion-exchange membrane has been studied because the reaction site is in alkaline-environment and metals other than precious metal can be used as catalysts. In this case, hydrogen or alcohol or so is supplied to the fuel chamber, and oxygen or water is supplied to the oxidant chamber; thereby hydroxide ions are generated as the catalyst included in the electrode of the oxidant chamber side catalyst electrode layer 7 contact with oxygen and water. These hydroxide ions move to the fuel chamber 9 by conducting inside the solid polymer electrolyte membrane 8 made of above mentioned anion-exchange membrane; then generates water by reacting with the fuel at the fuel chamber side catalytic electrode layer 5. However, along with this, the electrons generated at the fuel chamber side catalytic electrode layer 5 are moved to the oxidant chamber side catalytic electrode layer 7 via the external load circuit, and the energy of this reaction is used as the electric energy.

In order for the solid polymer type fuel cell using such anion-exchange membrane to be used widely, it is necessary to exhibit high output and to improve the durability even further. In order to obtain high output, it is considered to raise the operation temperature of the solid polymer type fuel cell, however when the operation temperature is raised, the ion exchange group of the ion-conductive additive, which is the anion-exchange resin forming the catalytic electrode layer, easily deteriorates, and the releasing of the catalytic electrode layer or so tends to occur easily. As a result, the durability as the solid polymer type fuel cell declines in some case.

In order to solve such problem relating to the durability, the present inventors have proposed the catalytic electrode layer using the ion-conductive additive comprising the crosslinking structure (for example, see the Patent documents 1, 2 and 3).

In the method disclosed in the patent documents 1 and 2, when forming the catalytic electrode, the composition comprising a precursor of the ion-conductive additive introduced with the organic group having halogen atoms, a multi-fuctionmal quaternizing agent and a catalyst for the electrode is prepared, then after molding this, the halogen atom and the multi-fuctionmal quaternizing agent are reacted. As a result, the multi-fuctionmal quaternizing agent is introduced into the precursor of the ion-conductive additive; thereby the catalytic electrode layer including the ion-conductive additive comprising the quaternary ammonium base and crosslinking structure can be obtained. The patent document 2 discloses to bond the ion exchange membrane and the catalytic electrode layer by the crosslinking structure using this method. According to this method, the catalytic electrode and the ion exchange membrane exhibits strong bonding, and the membrane-electrode-assembly with excellent durability can be obtained. However, according to the method disclosed in the patent documents 1 and 2, in order to form the catalytic electrode layer with various degrees of the crosslinking, it was necessary to prepare the catalytic electrode forming composition with different blending amount of the multi-fuctionmal quaternizing agent each time.

On the other hand, the patent document 3 discloses that, when producing the catalytic electrode layer, the method of forming the multilayer body by coating and drying to the supporting body with the composition comprising the electrode catalyst and the anionic-conductivity elastomer precursor introduced with halogen atom containing group which is the ion-conductive additive precursor, then crosslinking this multilayer body afterwards by the mixture product of the multi-fuctionmal quaternizing agent and monofunctional quaternizing agent (hereinafter, this crosslinking may be referred as "post-crosslinking"). In the patent document 3, the multilayer body including the ion-conductive additive precursor is quaternized and crosslinked afterwards; hence by adjusting the blending of the quaternizing agent, various degrees of the crosslinking of the catalytic electrode layer suited for the driving condition of the fuel cell can be formed, hence excellent fuel cell output can be obtained.

PRIOR ART

[Patent document 1] JP Patent Application Laid Open No.2003-86193
[Patent document 2] WO2007/072842
[Patent document 3] WO2013/129478

## DISCLOSURE OF INVENTION

## PROBLEM TO BE SOLVED BY THE INVENTION

However, in regards with these prior arts, the present inventors have carried out further examination using the ion-conductive additive introduced with the crosslinking structure to the catalytic electrode layer of the solid polymer type fuel cell using hydrocarbon based anion-exchange member (hereinafter, it may be referred as the anion-exchange membrane type fuel cell), then it was found that the performance of the anion-exchange membrane type fuel cell significantly depends on the ion-conductive additive included in the membrane-electrode assembly (MEA), and depending on the characteristic thereof, the anion-exchange membrane type fuel cell having sufficient performance was unable to obtain in some cases.

That is, according to the method of the patent document 3, the crosslinking reaction is carried out in the mixed solution of polyamine and monoamine, hence the degree of the crosslinking can be regulated by each mixing ratio to most suitable one. However, if the crosslinking structure is highly introduced, the ionic-conductivity or the gas diffusivity thereof may decline. On the other hand, if the degree of the crosslinking is lowered, then the declining of the ionic-conductivity or gas diffusivity of the ion-conductive additive can be suppressed. However, in the method of post-crosslinking the ion-conductive additive precursor as in the method of the patent document 3, when the degree of the crosslinking is lowered, the structural change of the catalytic electrode layer occurred in some cases during the crosslinking reaction. As a result, it is difficult to balance the durability and the battery characteristics, hence depending on the degree of the crosslinking, sufficient characteristics of the fuel cell was unable to obtain in some cases.

The structural change of the catalytic electrode layer is a phenomenon caused by the physical swelling of the entire catalytic electrode layer during the production process. Thereby, the size of the catalytic electrode layer changes before and after the post-crosslinking, thus the decline of productivity, and the performance decline of the catalytic electrode layer caused by the change of the fine structure inside the catalytic electrode layer may occur.

Regarding the decline of the performance of the catalytic electrode layer, the knowledge obtained by the inventors will be explained in detail. The ion-conductive additive precursor disclosed in the patent article 3 does not comprise ion exchange groups, hence at time of forming the catalytic electrode precursor layer, there is no swelling caused by hydration of the ion exchange group. However, in case of carrying out the post-crosslinking of this catalytic electrode precursor layer, due to the quaternization progressing simultaneously with the crosslinking, the quaternizing agent is introduced into the resin and the volume increases. Furthermore, due to the hydration effect caused by introducing the ion exchange group, the ion-conductive additive significantly swells during the crosslinking reaction. As such, the ion-conductive additive is significantly swollen inside the catalytic electrode layer when carrying the post-crosslinking, thus in the catalytic electrode precursor layer, the fine pore structure constituted from the electrode catalyst and the ion-conductive additive, or the aggregation structure between the electrode catalyst particles or so changes, and the gas diffusivity of hydrogen or oxygen or so which are necessary for the reaction deteriorates, and the electron conductivity declines. As a result, the performance of the obtained catalytic electrode layer may be insufficient.

Also, when the amount of the ion-conductive additive precursor included in the catalytic electrode layer precursor layer is too much, the degree of the swelling becomes large, and the cracking and releasing or so of the catalytic electrode layer itself occurs during the post-crosslinking, thus the catalytic electrode layer itself becomes difficult to form. Due to

such reason, the activity of the catalytic electrode layer itself declines, as a result, the characteristics of the fuel cell using this will also be insufficient.

That is, the object of the present invention is to provide the ion-conductive additive used for the fuel cell using the anion-exchange membrane, wherein the ion-conductive additive is capable of suppressing the swelling of the catalytic electrode layer during the post-crosslinking, capable of maintaining the ionic-conductivity and the gas diffusivity high even after the post-crosslinking step, also capable of forming highly active catalytic electrode layer, and capable of obtaining excellent fuel output.

**MEANS FOR SOLVING THE PROBLEM**

In order to attain above mentioned objects, the present inventors have carried out keen examination. As a result, the present inventors have found that from the point of the balance between the durability and the productivity, the styrene-based copolymer comprising a specific composition, specifically comprising the quaternary base anion-exchange group and crosslinkable haloalkyl group can attain such object.

Also, the present inventors have found that when forming the catalytic electrode layer, by contacting the multi-fuctionmal quaternizing agent with the catalytic electrode forming composition including the electrode catalyst and the ion-conductive additive made of above mentioned styrene-based copolymer, the present invention was attained.

According to the preferable embodiment of the present invention, the catalytic electrode layer is formed by using the ion-conductive additive made of partially quaternized styrene-based copolymer which is non-crosslinked and introduced with certain amount of the ion exchange group; then crosslinking reaction is carried out by polyamine compounds such as diamine, thereby the swelling of the catalytic electrode layer during the reaction can be suppressed to be very small. As a result, the fine structure of the initial catalytic electrode layer is maintained, and the catalytic electrode layer with excellent performance can be formed without compromising the electrochemical performances.

The first invention is the partially quaternized styrene-based compound including a constituent unit comprising the quaternary base type anion-exchange group shown by below formula (1), and a constituent unit comprising haloalkyl group shown by below formula (2).

[Chemical formula 1]

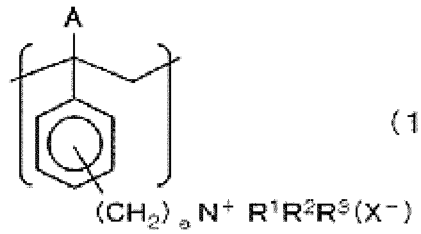

(1)

[Chemical formula 2]

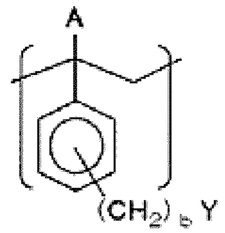

(2)

In the formula (1), "A" is hydrogen or methyl group, "a" is an integer of 1 to 8, $R^1$ and $R^2$ are methyl group or ethyl group, and $R^3$ is a linear alkyl group having a carbon atoms of 1 to 8. X- may be one or two or more of counter ions selected from the group consisting of $OH^-$, $HCO_3^-$, $CO_3^{2-}$, $Cl^-$, $Br^-$ and $I^-$.

In the formula (2), "A" is hydrogen or methyl group, "b" is an integer of 1 to 8, and "Y" is halogen atom selected from the group consisting of Cl, Br, and I.

In the first invention, the styrene-based copolymer of the present invention exhibits excellent characteristic as the ion-conductive additive, and includes the constituent unit comprising the quaternary base type anion-exchange group as shown by the formula (1) in a ratio of 10 to 99 mass% of the polymer, and the constituent unit comprising the haloalkyl group as shown by the formula (2) in a ratio of 1 to 70 mass%, in order to obtain excellent characteristic and durability

when used for the fuel cell.

The second invention is the ion-conductive additive for the catalytic electrode layer used in the anion-exchange membrane type fuel cell comprising the styrene-based copolymer according to the first invention.

The third invention is the catalytic electrode layer for the anion-exchange membrane type fuel cell, obtained by using the ion-conductive additive at least including the constituent units shown by the below formula (1) and the formula (3), wherein the catalytic electrode precursor layer is formed by coating and drying the catalytic electrode forming composition including the catalyst and the ion-conductive additive according to the second invention to the anion-exchange membrane, a precursor of the anion-exchange membrane, or a gas diffusion layer; then carrying out the quaternizing and crosslinking reaction by contacting with the polyamine compounds.

The formula (1) is as same as that shown in the first invention, and it shows the constituent unit comprising the quaternary base type anion-exchange group. The formula (3) shows the constituent unit wherein two aromatic rings are crosslinked; and "b" is an integer of 1 to 8, "c" is an integer of 2 to 8, $R^4$, $R^5$, $R^6$ and $R^7$ are selected from the group consisting of hydrogen, methyl group, and ethyl group. X- is one or two or more of counter ions selected from the group consisting of $OH^-$, $HCO_3^-$, $CO_3^{2-}$, $Cl^-$, $Br^-$ and $I^-$.

[Chemical formula 3]

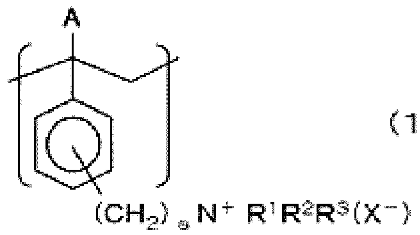

(1)

[Chemical formula 4]

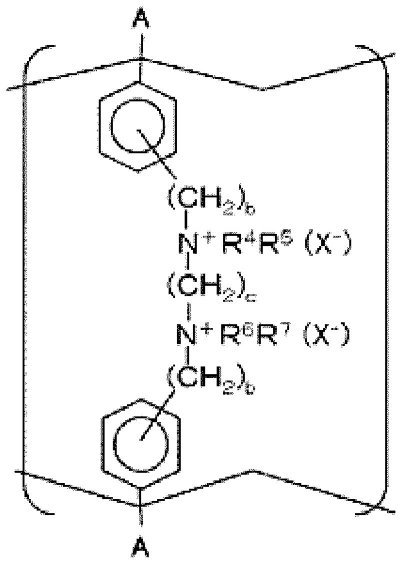

(3)

When the catalytic electrode layer produced according to the third invention is used to the fuel cell, in order to obtain the excellent output characteristic and durability, the ion-conductive additive included in the catalytic electrode layer of the present invention includes 10 to 95 mass% of the constituent unit comprising the quaternary base type anion-exchange group shown by the formula (1) in the ion-conductive additive, and 0.1 to 70 mass% of the constituent unit comprising the crosslinking structure shown by the formula (3) in the ion-conductive additive.

The fourth invention is the membrane-electrode assembly for the anion-exchange membrane type fuel cell comprising the catalytic electrode layer for the anion-exchange membrane type fuel cell according to the third invention.

The fifth invention is the gas diffusion electrode for the anion-exchange membrane type fuel cell comprising the catalytic electrode layer for the anion-exchange membrane type fuel cell according to the third invention.

The sixth invention is the anion-exchange membrane type fuel cell comprising the membrane-electrode assembly according to the fourth invention; and the seventh invention is the anion-exchange membrane type fuel cell

comprising the gas diffusion electrode according to the fifth invention.

Also, the eighth invention is the production method of the membrane-electrode assembly for the anion-exchange membrane type fuel cell comprising the steps of coating and drying a catalytic electrode forming composition comprising a catalyst and the ion-conductive additive according to the second invention, on an anion-exchange membrane or a precursor of the anion-exchange membrane to form a catalytic electrode precursor layer, then carrying out a quaternization and crosslinking reaction by contacting with polyamine compounds.

The ninth invention is the production method of the gas diffusion electrode for the anion-exchange membrane type fuel cell comprising the steps of coating and drying a catalytic electrode forming composition comprising a catalyst and the ion-conductive additive according to second invention, on a gas diffusion layer to form a catalytic electrode precursor layer, then carrying out a quaternization and crosslinking reaction by contacting with a polyamine compounds.

## EFFECT OF THE INVENTION

The catalytic electrode layer of the present invention which is obtained by first forming the catalytic electrode precursor layer comprising the catalyst and the ion-conductive additive made of the partially quaternized styrene-based copolymer, and then contacting with the polyamine compounds have excellent catalyst performance and durability while still maintaining the fine structure of the initial catalytic electrode layer as the catalyst electrode layer of the anion-exchange membrane type fuel cell. Therefore, the anion-exchange membrane type fuel cell comprising the membrane-electrode assembly or the gas diffusion electrode comprising the catalytic electrode layer of the present invention shows high output characteristic and durability, thus an excellent characteristic suitable for practical use can be obtained.

Furthermore, according to the present invention, even for the method of forming the catalytic electrode layer by post-crosslinking the catalytic electrode precursor layer, the swelling of the ion-conductive additive during the reaction can be small. As a result, the structural changes of the catalytic electrode layer during the reaction, which is typical of the production method for obtaining the catalytic electrode layer by post-crosslinking the catalytic electrode precursor layer, can be suppressed, thus not only excellent characteristic of the fuel cell can be obtained but also excellent productivity can be obtained, hence it is extremely useful.

## BRIEF DESCRIPTION OF THE DRAWINGS

**Fig.1** shows one example of the structure of the anion-exchange membrane type fuel cell.

## EMBODIMENTS FOR CARRYING OUT THE INVENTION

(The partially quaternized styrene-based copolymer used as the ion-conductive additive)

First, the partially quaternized styrene-based copolymer of the present invention will be explained.

The partially quaternized styrene-based copolymer can be used as the ion-conductive additive for forming the catalytic electrode layer used for the anion-exchange membrane type fuel cell. Here, the catalytic electrode layer refers to an anode wherein the fuel gas such as hydrogen reacts, and also refers to a cathode wherein an oxidant gas such as oxygen and air reacts; and the use thereof is not particularly limited to either one of the electrode, and it can be suitably used for the production of the catalytic electrode layer of both the anode and cathode.

The partially quaternized styrene-based copolymer of the present invention at least comprises a constituent unit comprising the quaternary base type anion-exchange group and a constituent unit comprising haloalkyl group.

The constituent comprising the quaternary base type anion-exchange group of the partially quaternized styrene-based copolymer of the present invention is shown by below formula (1).

[Chemical formula 5]

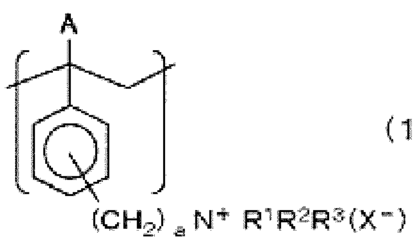

(1)

In the above formula (1), "A" is hydrogen atom or methyl group.

Also, the constituent unit comprising the quaternary base type anion-exchange group shown by the formula (1) comprises a quaternary ammonium base which is the ion-exchange group shown by $-(CH_2)_aN^+R^1R^2R^3(X^-)$. "a" is an integer of 1 to 8, and it is an index of methylene chain length bonding the aromatic ring and the nitrogen atom. Generally, it is known that the larger the "a" is, the better the chemical durability of the quaternary ammonium salt is. Therefore, the larger the "a" is, the more advantageous is from the point of the chemical durability of the formula (1). On the other hand, if "a" is too large, the hydrophobicity of the methylene chain increases, thus the anionic-conductivity may be compromised if it is too large. Therefore, preferably the hydrophobicity of the methylene chain and the hydrophilicity of the quaternary ammonium base are balanced, thus "a" is within the range of 1 to 8. Further, the density of the quaternary ammonium base as the ion-exchange group in the ion-conductive additive is one of the controlling factor of the ionic-conductivity; and the higher the density is, the higher the ionic-conductivity is, thus more preferably "a" is within the range of 1 to 6.

Also, $R^1$ and $R^2$ are methyl group or ethyl group, and $R^3$ is the linear alkyl group having the carbon atoms of 1 to 8. $R^3$ is preferably the linear alkyl group having the carbon atoms of 1 to 6, from the same reason for selecting the methylene chain length which bonds nitrogen atom and the aromatic ring of the formula (1).

X- is the counter ion of quaternary base type anion-exchange group, and it may be any one of the counter ion selected from the group consisting of $OH^-$, $HCO_3^-$, $CO_3^{2-}$, $Cl^-$, $Br^-$, $I^-$. The counter ion of the partially quaternized styrene-based copolymer may be one or, two or more thereof.

The constituent unit comprising the haloalkyl group of the partially quaternized styrene-based copolymer of the present invention is shown by below formula (2).

[Chemical formula 6]

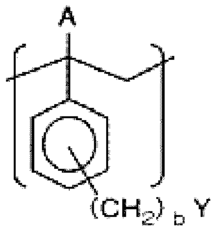

(2)

In the above formula (2), "A" is hydrogen atom or methyl group.

Also, the constituent unit comprising the haloalkyl group shown by the formula (2) comprises the linear haloalkyl group shown by $-(CH_2)_bY$. "b" is an integer of 1 to 8. "b" is the index of the alkyl chain length of the haloalkyl group, and if it is too long, the hydrophobicity of the entire ion-conductive additive increases, thus "b" is within the range of 1 to 8, preferably within the range of 1 to 6, and more preferably within the range of 1 to 4.

Also, "Y" is halogen atom, and it is selected without any particular limitation from the group consisting of Cl, Br, and I.

In the partially quaternized styrene-based copolymer of the present invention, the introduction amount of the constituent unit comprising the quaternary base type ion exchange group shown by the formula (1) directly influences the ionic-conductivity necessary for the copolymer to function as the ion-conductive additive. That is, the more the ion-exchange group is included in the ion-conductive additive, the higher the ionic-conductivity is. Therefore, the content ratio of the constituent unit comprising the quaternary base type ion exchange group shown by the formula (1) with respect to the entire mass of the styrene-based copolymer is 10 to 99 mass%, and in order to obtain better ionic-conductivity, it is preferably 20 to 95 mass%, more preferably 30 to 94 mass%, and particularly preferably 40 to 93 mass%.

The constituent unit comprising the haloalkyl group shown by the formula (2) functions as the hydrophobic part in case of using the styrene-based copolymer as the ion-conductive additive directly. In order for said copolymer to be used as the ion-conductive additive directly, it needs to be water-insoluble, and the introduction amount may be determined depending on the balance with the constituent unit comprising the quaternary base type ion exchange group shown by the formula (1) and also within the range which can maintain the water insoluble property. Also, as described in below, the copolymer can be used after introducing the crosslinking structure. In this case, the constituent unit comprising the haloalkyl group functions as the functional group for the crosslinking reaction. Therefore, if the introduction amount is too little, the crosslinking structure using the method described in below may not be appropriately introduced.

In view of the aforementioned, the content ratio of the constituent unit comprising the haloalkyl group shown by the formula (2) with respect to the mass of the entire styrene-based copolymer is 1 to 70 mass%, more preferably 2 to 70 mass%, and particularly preferably 3 to 50 mass%.

Further, the total amount of the introduction amount of the constituent unit comprising the quaternary base type ion exchange group shown by the formula (1), and the introduction amount of the constituent unit comprising the haloalkyl group shown by the formula (2) is 40 mass% or more and particularly preferably 50 mass% or more with respect to the partially quaternized styrene-based copolymer of the present invention.

Also, in order to adjust the reactivity and the physical characteristics or so, said styrene-based copolymer may be copolymerized with other components if needed within the range which does not contradict the object of the present invention. As such arbitrary component, vinyl compounds such as styrene, α-methyl styrene, vinylnaphthalene, acenaphthylene or so; and conjugated diene compounds such as butadiene, isoprene, chloroprene, 1,3-pentadiene, 2,3-dimethyl-1,3-butadiene or so may be mentioned. The content ratio of the constituting unit derived from said other components is not particularly limited, however, it is preferably 5 to 60 mass%, and particularly 10 to 50 mass%.

That is, the partially quaternized styrene-based copolymer may be copolymer of aromatic vinyl compounds, and it may be a copolymer between the aromatic vinyl compounds and the conjugated diene compounds. In case the partially quaternized styrene-based copolymer is the copolymer of the aromatic vinyl compounds, the polymerization style thereof is not particularly limited, and it may be a random copolymer and a block copolymer or so. Also, in case the partially quaternized styrene-based copolymer is the copolymer of the aromatic vinyl compounds and the conjugated diene compounds, the polymerization style is not particularly limited; and it may be a random copolymer and a block copolymer or so. Note that, the partially quaternized styrene-based copolymer is the copolymer of the aromatic vinyl compounds and the conjugated diene compounds, and in case the post-crosslinking is carried out for the ion-conductive additive of the present invention, and particularly preferably it is block copolymer.

In case of the block copolymer, as the form of the block, it may be diblock copolymer, triblock copolymer, multiblock copolymer or so, and among these, triblock copolymer is preferably used.

At the conjugated diene part of these block copolymer and the random copolymer or so, hydrogenation may be carried out. The hydrogenation ratio for such case is preferably 80% or more, particularly preferably 90% or more, and preferably 100% or less.

The number average molecular weight of the partially quaternized styrene-based copolymer is preferably 5000 to 300,000, and more preferably 10,000 to 200,000.

(The production method of the partially quaternized styrene-based copolymer used in the ion-conductive additive)

The means of producing the partially quaternized styrene-based copolymer is not particularly limited, and it may be produced by polymerizing the polymerizable composition which includes the aromatic vinyl compounds comprising the quaternary base type anion-exchange group and the aromatic vinyl compounds comprising haloalkyl group; or the method of first producing the styrene-based polymer including the constituent unit derived from the aromatic vinyl compounds having haloalkyl group (hereinafter, it may be referred as a styrene-based polymer comprising haloalkyl group) and then converting part of the haloalkyl group to quaternary base type anion-exchange group may be selected. Among these, the latter method of which first producing the styrene-based polymer comprising haloalkyl group and then converting a part of the haloalkyl group to quaternary base type anion-exchange group is preferably used, because the quaternary base type anion-exchange group can be introduced quantitatively.

(The production method of the styrene-based polymer comprising the haloalkyl group)

The production method of the styrene-based polymer comprising haloalkyl group is not particularly limited, however the method of polymerizing the polymerizable composition including the aromatic vinyl compounds comprising the haloalkyl group; or the method of introducing the haloalkyl group to the styrene-based polymer obtained by polymerizing the aromatic vinyl compounds capable of introducing the haloalkyl group after polymerization or so may be mentioned.

In case of polymerizing the polymerizable composition including the aromatic vinyl compound comprising the haloalkyl group, the polymerizable composition including the aromatic vinyl compound comprising the haloalkyl group is polymerized by conventionally known method. The aromatic vinyl compound comprising the haloalkyl group may be homopolymerized, or it may be copolymerized with other polymerizable monomers.

As the aromatic vinyl compounds comprising the haloalkyl group, chloromethyl styrene, chloroethyl styrene, chloropropyl styrene, chlorobutyl styrene, chloropentyl styrene, chlorohexyl styrene, bromomethyl styrene, bromoethyl styrene, bromopropyl styrene, bromobutyl styrene, bromopentyl styrene, bromohexyl styrene, iodomethyl styrene, iodoethyl styrene, iodopropyl styrene, iodobutyl styrene, iodopentyl styrene, iodohexyl styrene or so may be mentioned.

Note that, the aromatic vinyl compounds comprising the haloalkyl group having the carbon atoms of 7 or more which is not mentioned in the above, has slow polymerization speed, and a gelation tends to easily occur during the polymerization, hence it is difficult to obtain the copolymer having the molecular weight which is within the preferable range of the present invention. Therefore, it is preferably produced by the method of introducing the haloalkyl group to

the styrene-based polymer obtained by polymerizing the aromatic vinyl compounds capable of introducing the haloalkyl group after polymerization.

The content ratio of the aromatic vinyl compounds comprising the haloalkyl group in the polymerizable composition is preferably 1 to 100 mass% and more preferably 10 to 100 mass% with respect to the weight of the polymerizable composition.

The polymerizable composition may be blended with other polymerizable monomers if needed, other than the aromatic vinyl compound comprising the haloalkyl group mentioned in the above.

The content ratio of other components is not particularly limited, and it is 80 mass% or less, and particularly preferably 60 mass% or less of the mass of the polymerizable composition.

Next, the method of introducing the haloalkyl group to the styrene-based polymer obtained by polymerizing the aromatic vinyl compounds capable of introducing the haloalkyl group after polymerization will be explained.

As the aromatic vinyl compounds capable of introducing the haloalkyl group, styrene and alfamethyl styrene are preferably used.

The method of introducing the haloalkyl group to the styrene-based polymer after the polymerization is not particularly limited, and known methods may be employed. Specifically, a method of halogenating after reacting the aromatic ring of styrene with formaldehyde; a method of reacting the aromatic ring of styrene with halogenomethyl ether; a method of providing alkyl group by Grignard reaction after the aromatic ring of styrene is halogenated, then halogenating the alkyl chain terminal or so may be mentioned.

As the method of polymerizing the polymerizable compound including the aromatic vinyl compounds comprising the haloalkyl group, or the polymerizable monomer capable of introducing the haloalkyl group, a known polymerization method such as a solution polymerization, a suspension polymerization, and an emulsion polymerization or so may be mentioned. The polymerization method depends on the composition or so of the monomer composition, and it is not particularly limited, thus the polymerization method may be selected appropriately.

(The partial quaternization of the styrene-based polymer comprising the haloalkyl group)

As the method for partially converting the haloalkyl group of the styrene-based polymer comprising the haloalkyl group produced as mentioned in above to quaternary base type anions, the easy method is to contact the styrene-based polymer with the monofunctional quaternizing agent.

As the monofunctional quaternizing agent, a tertiary amine capable of obtaining the desired structure shown by the formula (1) after the introduction can be selected appropriately. As the tertiary amines, trialkylamines shown by $NR^1R^2R^3$ ($R^1$ and $R^2$ are methyl group or ethyl group, and $R^3$ is the linear alkyl group having the carbon atoms of 1 to 8) may be mentioned, and specifically trialkylamines such as trimethylamine, triethylamine, dimethylethylamine, dimethylpropylamine, dimethylbutylamine, dimethylpentylamine, dimethylhexylamine, dimethylheptylamine, dimethyloctylamine, diethylmethylamine, diethylpropylamine, diethylbutylamine, diethylpentylamine, diethylhexylamine, diethylheptylamine, diethyloctylamine, ethylmethylpropylamine, ethylmethylbutylamine, ethylmethylpentylamine, ethylmethylhexylamine, ethylmethylheptylamine, ethylmethyloctylamine or so may be mentioned.

As the tertiary amines, from the point of high reactivity and easiness to obtain, trimethylamine, triethylamine, dimethylbutylamine, dimethylhexylamine, dimethyloctylamine, diethylbutylamine, diethylhexylamine, diethyloctylamine are preferably used.

The amount of the monofunctional quaternizing agent for the reaction is determined appropriately depending on the composition of the partially quaternized styrene-based polymer, and also depending on the amount of the styrene-based copolymer comprising the haloalkyl group which is used for the reaction. In the reaction, one molecule of haloalkyl group reacts with one molecule of tertiary amine. Therefore, for mol number of the haloalkyl group necessary to form the desired composition of the partially quaternized styrene-based copolymer, same mol of the monofunctional quaternizing agent is preferably used. That is, in order to regulate the content ratio of the constituent unit comprising the quaternary base type anion-exchange group shown by the formula (1) to the desired ratio, the same mol number of the monofunctional quaternizing agent as the mol number of the haloalkyl group which is to be quaternized is preferably used. For example, in case of obtaining the partially quaternized styrene-based copolymer including 50 mol% of the constituent unit of the quaternary base type anion-exchange group shown by the formula (1), using the styrene-based polymer consisting only of the constituent unit comprising the haloalkyl group as the source material, then the amount (mol number) of the monofunctional quaternizing agent equivalent to 50 mol% of the haloalkyl group may be used.

As the method for contacting the tertiary amines with the styrene-based copolymer comprising the haloalkyl group, from the point of ensuring the uniformity of the reaction, the quaternizing agent is diluted in the solvent; thereby the contact is carried out. Further, for the styrene-based polymer comprising the haloalkyl group, from the point of ensuring further uniform reactivity, it is also preferable to liquefy the styrene-based polymer for contacting. Therefore, the choice of the solvent used for the reaction is very important.

In case of contacting the tertiary amines with the styrene-based copolymer comprising the haloalkyl group of

the solid state, even if the tertiary amines are diluted in the solvent, generally the reaction starts from the polymer solid surface where the tertiary amines and the polymer are in contact. That is, the reaction proceeds while the tertiary amines infiltrates to the inside of the polymer, hence the degree of the progress of the reaction differs between the near surface of the solid polymer and at the inside of the solid polymer. That is, the reaction strongly depends on the particle size and the shape of the polymer, and the reaction is non-uniform, hence this is not preferable. Therefore, the reaction of the tertiary amines and the styrene-based copolymer comprising the haloalkyl group is preferably carried out in the solution; and furthermore, in case the copolymer is deposited during the reaction, the reaction becomes non-uniform as mentioned in the above, therefore the copolymer preferably maintains the solution state from the start to the end of the quaternizing reaction.

The solvent capable of attaining the object mentioned in the above is not particularly limited, and the solvent which can dissolve both the tertiary amines and the styrene-based polymer comprising the haloalkyl group may be selected. As the example of solvent, chlorine based organic solvents such as chloroform, and dichloromethane or so; cyclic ether based organic solvents such as tetrahydrofuran and dioxane or so; cyclohexanes; alcohols such as, methanol, ethanol, propanol, isopropyl alcohol or so and water may be mentioned. Also, these solvents may be mixed for use.

The reaction condition is not particularly limited, however in case the reaction between the tertiary amines and the styrene-based copolymer comprising the haloalkyl group is carried out in the solution, it is preferable to carry out under the condition described in below in order to obtain the desired partially quaternized styrene-based copolymer of the present invention. That is, in order to prevent the tertiary amine from scattering out of the reaction system, the reaction is preferably carried in the closed reaction container; and in order to process the reaction uniformly, it is preferable to stir aggressively. The reaction temperature is not particularly limited, however 15°C to 40°C is preferable. The reaction time may be determined depending on the reactivity of tertiary amines and the haloalkyl group, that is depending on the reaction speed. Preferably the reaction time is 5 to 48 hours, and from the point of increasing the productivity, it is more preferably 5 to 24 hours.

After completing the reaction, and also after completing the deposition treatment depending on the needs, the copolymer of after the reaction is washed with appropriate solvent, then the resin is dried. The solvent used for the washing is not particularly limited, and the solvent which does not dissolve the obtained partially quaternized styrene-based copolymer may be selected. The drying condition is also not particularly limited, and it may be done at the temperature and humidity of which the quaternary base type anion-exchange group and the haloalkyl group in the resin does not degenerate; and preferably the drying is carried out at the temperature of 15°C to 70°C, the relative humidity of 0 to 80% for 5 to 48 hours.

(The counter ion exchange of the partially quaternized styrene-based copolymer)

The quaternary base type anion-exchange group included in the obtained partially quaternized styrene-based copolymer comprises the halide ions derived from the haloalkyl group provided for the reaction as the counter ion. In case the obtained partially quaternized styrene-based copolymer is actually used as the ion-conductive additive, the counter ion needs to be any one of hydroxide ion, bicarbonate ion and carbonate ion, or the combination thereof. However, the counter ion exchange of the partially quaternized styrene-based copolymer may be carried out at this stage or after the catalytic electrode layer is formed, and it is not particularly limited. When carrying out the counter ion exchange, the partially quaternized styrene-based copolymer is contacted several times with the aqueous solution of the inorganic salt comprising the desired anion such as sodium hydroxide, potassium hydroxide, sodium bicarbonate, potassium bicarbonate, sodium carbonate and potassium carbonate or so.

The partially quaternized styrene-based copolymer of the present invention can be suitably used as the ion-conductive additive for the catalytic electrode layer of the anion-exchange membrane type fuel cell.

In order to use the partially quaternized styrene-based copolymer as the ion-conductive additive, the ion exchange capacity of the ion-conductive additive of the partially quaternized styrene-based copolymer is preferably adjusted to 1.0 to 4.6 mmol/g, because excellent ionic-conductivity and gas permeability or so can be attained. The water content of the ion-conductive additive is preferably 10 to 150% which is the value measured under the condition of 40°C and 90%RH.

The catalytic electrode precursor layer including the ion-conductive additive of the present invention is formed, and then this is crosslinked, thereby it can be used as the catalytic electrode layer. In this case, the ion exchange capacity of the ion-conductive additive without the introduction of the crosslinking structure is preferably adjusted to 1.8 to 4.6 mmol/g. Also, the water content is preferably 10 to 150% which is the value measured under the condition of 40°C and 90%RH.

By having the ion exchange capacity and the water content within such range, when the ion-conductive additive of the present invention is used to form the catalytic electrode layer and used for the fuel cell, then the ion-conductive additive does not elute into the water at inside of the fuel cell; hence good physical characteristics can be maintained through the long term operation period, therefore good fuel cell output and durability can be realized.

Also, by forming the catalytic electrode precursor layer including the ion-conductive additive of the present invention without carrying out the crosslinking, it can be used as the catalytic electrode layer. In this case, the ion exchange capacity of the ion-conductive additive is preferably adjusted within the range of 1.8 to 4.2 mmol/g. Also, the water content is preferably 10 to 100% which is the value measured under the condition of 40°C and 90%RH. By having the ion-exchange capacity and the water content within such range, when the ion-conductive additive of the present invention is used to form the catalytic electrode layer and used for the fuel cell, then the ionic-exchange capacity does not elute into the water at inside of the fuel cell; hence good physical characteristics can be maintained through the long term operation period, therefore good fuel cell output and durability can be realized.

(The catalytic electrode)

The catalytic electrode layer for the anion-exchange membrane type fuel cell of the present invention comprises the electrode catalyst and the ion-conductive additive comprising the constituent unit comprising the crosslinking structure (herein after, it will be referred as the ion-conductive additive comprising the crosslinking structure).

The ion-conductive additive comprising the crosslinking structure at least includes the constituent unit comprising the quaternary base type anion-exchange group shown by the below formula (1) and the constituent unit comprising the crosslinking structure shown by below (3).

[Chemical formula 7]

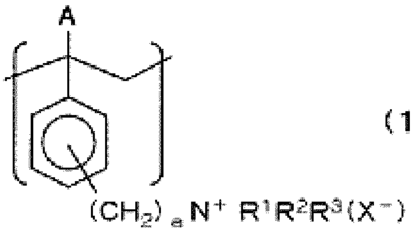

(1)

[Chemical formula 8]

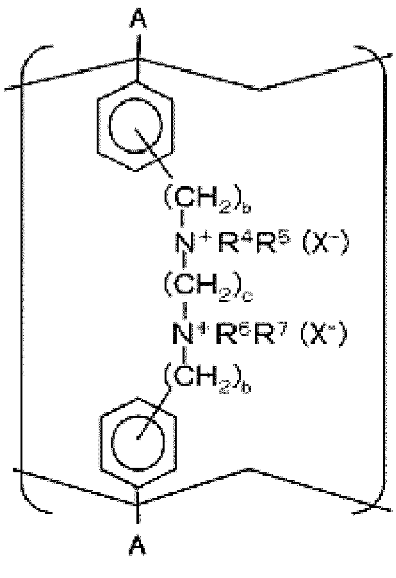

(3)

The above formula (1) is as same as the ion-conductive additive mentioned in the above.

The formula (3) comprises the group shown by $-(CH_2)_bN^+(X^-)R^4R^5(CH_2)cN^+(X^-)R^6R^7(CH_2)_b-$ which crosslinks the two aromatic rings and includes two quaternary ammonium bases.

"b" is an integer of 1 to 8, and "c" is the integer of 2 to 8. "b" shows the methylene chain length bonding nitrogen atoms of the quaternary ammonium salt near the aromatic ring, "c" is the methylene chain length bonding nitrogen atom of two quaternary ammonium salts.

The structure shown by the formula (3) shows the crosslinking part of the ion-conductive additive comprising the crosslinking structure, however because it includes two quaternary ammonium salts, this itself also functions as the

ion-exchange group. The ions conducts via the ion-exchange group in the ion-conductive additive, hence if the crosslinking is carried out by the group without the anion-exchange group in place of the group shown by $-(CH_2)_bN^+(X^-)R^4R^5(CH_2)cN^+(X^-)R^6R^7(CH_2)_b-$, this will make extremely hydrophobic crosslinking part, and this part cannot be part of the ion conduction in the ion-conductive additive. As a result, the ionic-conductivity of the ion-conductive additive becomes low. Therefore, the crosslinking by $-(CH_2)_bN^+(X^-)R^4R^5(CH_2)cN^+(X^-)R^6R^7(CH_2)_b-$ is very essential in order to exhibit excellent ionic-conductivity while contributing to improve the size stability and durability of the ion-conductive additive by introducing the crosslinking structure. Therefore, $-(CH_2)_bN^+(X^-)R^4R^5(CH_2)cN^+(X^-)R^6R^7(CH_2)_b-$ is not a simply a crosslinking part, but it is necessary to design so that it can contribute to the ionic-conductivity. If "b" is too long, which is the index of the methylene chain length bonding the aromatic ring and nitrogen of atom of the quaternary ammonium salt near the aromatic ring, this will make hydrophobic thus the ionic-conductivity is interfered; therefore "b" is preferably in the range of 1 to 8, more preferably within the range of 1 to 6, and even more preferably within the range of 1 to 4. Also, for the methylene chain length bonding two quaternary ammonium bases, due to the same reason, the hydrophobicity increases if it is too long, and will adversely affect the ionic-conductivity. On the other hand, if it is too short, nitrogen of two quaternary ammonium salts approaches close to each other and would be chemically unstable structure; hence it is a problem to be too short as well. Therefore, "c" which is the index of the methylene chain length bonding two quaternary ammonium bases, is within the range of 2 to 8, and more preferably within the range of 2 to 6.

$R^4$, $R^5$, $R^6$ and $R^7$ are selected from the group consisting of hydrogen, methyl group or ethyl group; and preferably these are methyl group and ethyl group. In the methylene chain $(CH_2)c$ of the structure shown by the formula (3), amino group may be further included, and in this case the amino group may form the crosslinked quaternary ammonium base by reacting with other haloalkyl group further included in the styrene based copolymer. As the embodiment wherein the amino group is further included in $(CH_2)c$, it may be a structure wherein a part of the methylene $(-CH_2-)$ is substituted with -NH- group, -NR- group (R is the linear alkyl group having the carbon atoms of 1 to 8) and it may be a structure wherein a part of hydrogen included in methylene $(-CH_2-)$ is substituted with amino group, alkylamino group. These crosslinking structures further including the amino group or the quaternary ammonium base are formed by using the polyamines such as triamine or larger during the crosslinking and quaternizing step described in below.

X- is a counter ion of the quaternary base type anion-exchange group, and it is any one selected from the group consisting of $OH^-$, $HCO_3^-$, $CO_3^{2-}$, $Cl^-$, $Br^-$ and $I^-$; and the counter ion of the ion-conductive additive may be one or, two or more thereof.

In the catalytic electrode layer for the anion-exchange membrane type fuel cell of the present invention, the content ratio of the constituent unit comprising the quaternary base type anion-exchange group shown by the formula (1) in the ion-conductive additive comprising the crosslinking structure directly influence the ionic-conductivity of the ion-conductive additive; and the more the introduction amount is, the higher the ionic-conductivity is. Therefore, the content ratio of the constituent unit comprising the quaternary base type anion-exchange group shown by the formula (1) is 10 to 95 mass%, more preferably 20 to 94 mass%, even more preferably 30 to 93 mass%, and particularly preferably 35 to 92 mass% with respect to the weight of the ion-conductive additive. Also, regarding the content ratio of the constituent unit comprising the crosslinking structure shown by the formula (3), as mentioned in above, it is the group which comprises the ion-exchange group at the time of forming the crosslinking structure, therefore the chemical stability and the size stability of the ion-conductive additive are enhanced, and also the ionic-conductivity is improved at the same time; however when compared to the constituent unit of non-crosslinking as shown by the formula (1), then the part introduced with the crosslink has lower ionic-conductivity. Therefore, the introduction amount may be determined according to the property of the desired catalytic electrode layer shown by the formula (3), and the content ratio of the constituent unit comprising the crosslinking structure shown by the formula (3) is 0.1 to 70 mass%, more preferably 1 to 55 mass%, and particularly preferably 5 to 55 mass% with respect to the weight of the ion-conductive additive.

Since the ion-conductive additive comprising the crosslinking structure of the present invention has the crosslinking structure, it is difficult to clearly define the ordered structure of the monomer unit or so, but the constitution thereof is not particularly limited, and it may comprise random structure, or may partially comprise block structure. In case of the block copolymer, as the embodiment of the blocks, diblock copolymer, triblock copolymer, multiblock copolymer or so may be mentioned; and among these, triblock copolymer is preferably used.

The ion-conductive additive comprising the crosslinking structure which is included in the catalytic electrode layer for the anion-exchange membrane type fuel cell of the present invention, may in some case include the non-crosslinking quaternary ammonium base as shown by the below formula (4), other than the constituent unit comprising the quaternary base type anion-exchange group shown by the formula (1) and the constituent unit shown by the formula (3) which are essential constituent component of the ion-conductive additive.

[Chemical formula 9]

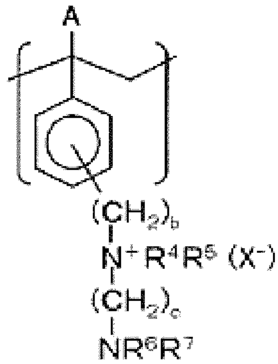

(4)

The ion-conductive additive comprising the crosslinking structure which is included in the catalytic electrode layer for the anion-exchange membrane type fuel cell of the present invention is the ion-conductive additive crosslinked by the polyamine compounds such as diamine compounds as shown in below. When the diamine compounds contact with the non-crosslinking ion-conductive additive, in case it reacts with two haloalkyl groups, the crosslinking part shown by the formula (3) is formed, however if only one haloalkyl group is reacted, then the non-crosslinking quaternary ammonium base as shown by formula (4) is formed. The formula (4) comprises the quaternary ammonium base shown by $(CH_2)_bN^+(X^-)R^4R^5(CH_2)cNR^6R^7$. "b" is an integer of 1 to 8, and "c" is the integer of 2 to 8. $R^4$, $R^5$, $R^6$ and $R^7$ are selected from the group consisting of hydrogen, methyl group and ethyl group. X- is a counter ion, and it is any one selected from the group consisting of $OH^-$, $HCO_3^-$, $CO_3^{2-}$, $Cl^-$, $Br^-$ and $I^-$; and the counter ion of the ion-conductive additive comprising the crosslinking structure may be one or, two or more thereof. The preferable embodiments of "b", "c", $R^4$, $R^5$, $R^6$ and $R^7$ are as same as already mentioned in above.

The constituent unit comprising the second non-crosslinking quaternary ammonium base shown by the formula (4) has the quaternary ammonium salt structure, thus even if this is produced, there is only very little influence to the property as the ion-conductivity of the ion-conductivity imparter. The produced ratio of such parts can be different depending on the production method of the catalytic electrode layer because the contacting method of the non-crosslinking ion-conductive additive and the diamine compounds differs. Although the detailed reasons are unknown, only when the crosslinking reaction by the diamine compounds is carried out to aforementioned non-crosslinking ion-conductive additive, the produced amount of the formula (4) is suppressed to extremely low amount, and among the diamine compounds related to the reaction, the ratio of having the structure of the formula (4) is known to be 10 mol% or so even if it is large. In general, this can be determined by conventionally known $C^{13}$ solid NMR method and a titration method or so.

The ion exchange capacity of the ion-conductive additive comprising the crosslinking structure, which is an essential component of the catalytic electrode layer for the anion-exchange membrane type fuel cell of the present invention, is preferably within the range of 1.8 to 4.6 mmol/g. Also, the water content is preferably 10 to 200% which is the value measured under the condition of 40°C and 90%RH. The ion-conductive additive comprising the crosslinking structure used for the catalytic electrode layer for the anion-exchange membrane type fuel cell of the present invention has excellent chemical stability due to the introduction of the crosslinked structure and also has excellent ionic-conductivity by having the ion exchange capacity and the water content within the above mentioned range.

The catalytic electrode layer for the anion-exchange membrane type fuel cell of the present invention comprises the electrode catalyst besides the ion-conductive additive comprising the crosslinking structure.

As the catalyst for this catalytic electrode layer, the known catalyst can be used. For example, the metal particles such as platinum, gold, silver, palladium, iridium, rhodium, ruthenium, tin, iron, cobalt, nickel, molybdenum, tungsten, vanadium, or the alloy thereof or so can be used without particular limitation, however platinum group catalyst is preferably used as it has excellent catalytic activity.

Note that, the particle diameter of the metal particle, which are these catalysts, are usually within the range of 0.1 to 100 nm, and more preferably 0.5 to 10 nm. The smaller the particle diameter is, the higher the catalytic performance is, however it is difficult to produce those with the particle diameter of less than 0.5 nm, but if it is larger than 100 nm, then a sufficient catalytic performance is difficult to obtain. Also, these catalysts may be used after preliminarily supported by a conductive material. The conductive material may be any electron conducting substance and not particularly limited, and it is common to use, for example, carbon black such as furnace black and acetylene black, activated carbon, black lead or so, either alone or in combination thereof. The content of the catalyst can be normally 0.01 to 10 $mg/cm^2$, more preferably 0.1 to 5.0 $mg/cm^2$, in terms of the metal weight per unit area when the catalytic electrode layer is sheet-shaped.

The catalytic electrode layer for the anion-exchange membrane type fuel cell of the present invention may include the electron conductivity imparter in order to enhance the electron conductivity of the catalytic electrode layer,

and to obtain the excellent characteristic of the catalytic electrode layer. As the electron conductivity imparter, carbon black, graphite, carbon nanotube, carbon nanohorn and carbon fibers or so may be mentioned.

In the present invention, the ratio between the added amount of the non-crosslinking ion-conductive additive and the electrode catalyst in the catalytic electrode forming composition significantly affects the structure of the obtained catalytic electrode layer precursor; hence the selection thereof directly influences the electrochemical characteristic of the catalytic electrode layer. In case the ion-conductive additive is too little, the ionic-conductivity in the catalytic electrode layer becomes insufficient, thus it is not preferable. On the contrast, if it is too much, each individual electrode catalyst particles will be coated by thick ion-conductive additive, as a result, the contact between the particles against each other is deteriorated and the electron conductivity is lowered, thus it is not preferable. Therefore, it is extremely important to adjust the ionic-conductivity and the electron conductivity in the catalytic electrode layer within an appropriate range. In view of such point, although it differs depending on the structures such as the particles diameter and the specific surface area of the used electrode catalyst, and the used ion-conductive additive, should the mass ratio between the electrode catalyst and the ion-conductive additive be shown (the electrode catalyst mass / the ion-conductive additive mass), it is preferably within the range of 99/1 to 40/60, and more preferably within the range of 95/5 to 50/50.

The catalytic electrode layer for anion-exchange membrane type fuel cell comprises the binder if needed. As the binder added depending on the needs, various thermoplastic resins are generally used. As the preferably used thermoplastic resins, for example polytetrafluoroethylene, polyvinylidene fluoride, tetrafluoroethylene-perfluoroalkyl vinyl ether copolymer, polyether ether ketone, polyether sulfone, styrene-butadiene copolymer, acrylonitrile butadiene copolymer or so may be mentioned. The content ratio of the binder is preferably 5 to 25 mass% of the above mentioned catalytic electrode layer. Also, the binder may be used alone, or two or more may be combined for use.

The thickness of the catalytic electrode layer is not particularly limited, and it may be determined accordingly depending on the purpose of use. In general, it is preferably 0.1 to 50 $\mu$m, and more preferably 0.5 to 20 $\mu$m.

(The production method of the catalytic electrode layer)

The catalytic electrode layer for the anion-exchange membrane type fuel cell can be produced by coating and drying the catalytic electrode forming composition comprising the ion-conductive additive and the electrode catalyst on the gas diffusion layer, the anion-exchange membrane or the anion-exchange membrane precursor to form the catalytic electrode precursor layer, then quaternizing and crosslinking the ion-conductive additive of the present invention in the solution at least including polyamine compounds.

According to the production method of the catalytic electrode layer for the anion-exchange membrane type fuel cell of the present invention, by using the ion-conductive additive of the present invention which is non-crosslinked and partially quaternized, when the precursor of the catalytic electrode layer including the ion-conductive additive is subjected to the quaternization and crosslinking reaction in the solution at least including the polyamine compounds, the size change ratio of the catalytic electrode layer itself before and after the reaction, and the change of the microstructure inside the layer formed in the precursor of the catalytic electrode layer can be significantly suppressed, therefore the catalytic electrode layer having excellent characteristics can be produced. That is, according to the present invention, the size change ratio before and after the crosslinking reaction of the ion-conductive additive during the catalytic electrode production is extremely small. This is because the ion-conductive additive already comprises certain amount of monofunctional quaternary ammonium base, thus the number of the quaternary ammonium base introduced during the crosslinking reaction is small, and a lot of them is the part comprising the crosslinking structure, therefore the swelling of the ion-conductive additive is suppressed to minimum.

In general, as factors which influences the characteristics of the catalytic electrode layer, the electron conductivity of the catalytic electrode layer, the presence of internal fine pores formed by the catalyst particle and the ion-conductive additive, the gas diffusivity of the ion-conductive additive, and the ionic-conductivity of the ion-conductive additive or so are known. The higher the electron conductivity of the catalytic electrode layer, the gas diffusivity of the ion-conductive additive and the ionic-conductivity of the ion-conductive additive are, the better the characteristic of the catalytic electrode layer is.

On the contrary, when the ion-conductive additive significantly swells during the crosslinking reaction in the production method of the catalytic electrode layer for the anion-exchange membrane type fuel cell, this means that the ion-conductive additive has swollen which is coating or is in contact with the catalyst particles in the precursor state or in contact with the electron conductivity imparter such as the carbon fine particles which will be described in below. As a result of the swollen ion-conductive additive, the contact between the electron conductivity imparter and the catalyst particle which functions to conduct the electron deteriorates, hence the electron conductivity declines, thus the characteristic of the catalytic electrode layer is also lowered. Further, the swelling of the ion-conductive additive covers the internal pores formed at the inside of the catalytic electrode precursor layer, thus the gas diffusivity is also lowered. Due to such reasons, if the ion-conductive additive in the catalytic imparter is largely swollen, then characteristics of the catalytic electrode layer will be insufficient.

Also, in case the swelling of the ionic-conductivity is too large, the size of the catalytic electrode layer itself increases. That is, the size formed at the precursor state will be larger after the quaternization and crosslinking reaction, thus this easily causes mismatching between the size of the fuel cell used for electric power generation. In many cases when the electrode area is larger than the optimum size for the fuel cell, then it is difficult to maintain the airtightness of inside of the cell, hence causes the gas leak or so, and not only that this lowers the fuel cell efficiency but also it is even dangerous in case of using the fuel such as hydrogen gas or so. As such, the large size change of the catalytic layer during the quaternization and crosslinking reaction, is not only the problem of productivity, but also influences the electric power generation efficiency and the safeties.

According to the present invention, not only the catalytic electrode layer comprising the excellent characteristic can be obtained, but also excellent effects regarding the productivity of the catalytic electrode layer, the electric power generation efficiency of the fuel cell using thereof, and the safeties can be obtained.

Hereinbelow, the production method of the catalytic electrode layer will be described.

(The catalytic electrode forming composition)

For forming the catalytic electrode layer, generally, the dispersion liquid including the electrode catalyst and the ion-conductive additive or so is prepared, then this is coated on the anion-exchange membrane or the gas diffusion layer, thereby the catalytic electrode layer is formed. (Hereinafter, the dispersion liquid including the electrode catalyst and the ion-conductive additive will be referred as the catalytic electrode forming composition, and the layer formed by coating this will be referred as the catalytic electrode precursor layer.)

The catalytic electrode forming composition comprises the electrode catalyst and the ion-conductive additive of the present invention which is non-crosslinking and partially quaternized, and if needed, the solvent and the electron conductive imparter may be further included.

The ion-conductive additive of the present invention may be solid or in dissolved state in the catalytic electrode forming composition and it is not particularly limited. Here, in the catalytic electrode layer, if each individual catalyst particle is uniformly coated by the ion-conductive additive, then the electrochemical function of the catalyst is exhibited, and the catalytic electrode layer is highly activated. Then, if the ion-conductive additive is added to the solvent, and the ion-conductive additive is liquefied, then the electrode catalyst is uniformly dispersed in the dispersion liquid, and the surface thereof is sufficiently coated by the ion-conductive additive, thereby the catalytic electrode layer having excellent characteristics can be obtained.

The solvent used to liquefy the ion-conductive additive is not particularly limited, however the polar solvent is preferably used from the point that the ion-conductive additive itself can dissolve well, has good affinity with the catalyst particles when used for forming the catalytic electrode layer, and to obtain highly dispersed state. As such solvent, cyclic ether based organic solvents such as tetrahydrofuran and dioxane or so; alcohols such as methanol, ethanol, propanol, isopropylalcohols or so; water; esters such as ethyl acetate or so; and cyclic hydrocarbons such as cyclohexane or so may be mentioned. Also, the mixture solvent thereof may be used.

The method of liquefaction is not particularly limited, and the method of simply adding the ion-conductive additive to the solvent and then stirring is easy. Depending on the constitution of the ion-conductive additive and the solvent composition, the dissolving may be facilitated by applying a heat. The dissolving step is preferably carried out at the temperature of 15°C or higher, and the temperature equal or lower than the boiling point of the used solvent. If the liquefaction is carried out at excessively high temperature, the quaternary ammonium salt or the haloalkyl group included in the ion-conductive additive denatures, thus it is not preferable.

The concentration of the ion-conductive additive solution is not particularly limited, however if the concentration of the solution is too high, generally the viscosity of the solution significantly increases, and this will cause a trouble for the handling when forming the catalytic electrode layer, and also would take too much time for liquefaction, therefore it is preferable to set the concentration so that the viscosity of the solution is relatively low, and the concentration of the ion-conductive additive within the entire solution is preferably 1 to 20 mass%.

(The catalyst for the catalytic electrode layer)

Here, the electrode catalyst used for the production method of the catalytic electrode layer for the anion-exchange membrane type fuel cell of the present invention will be described. As the catalyst for the catalytic electrode layer, the known catalyst can be used as mentioned in above. For example, as mentioned in above, metallic particles such as platinum, gold, silver, palladium, iridium, rhodium, ruthenium, tin, iron, cobalt, nickel, molybdenum, tungsten, vanadium or alloys thereof can be used without limitation to facilitate the oxidation reaction of hydrogen and the reduction reaction of oxygen, and it is preferable to use platinum group catalyst because of excellent catalyst activity.

Note that particle diameter of these catalysts may normally be 0.1 to 100 nm, more preferably 0.5 to 10 nm. The smaller particle diameter results in higher catalyst performance, but it is difficult to prepare those with a particle

diameter of less than 0.5 nm; while if it is more than 100 nm, sufficient catalyst performance can hardly be obtained. Also, the catalyst may be used after preliminarily supported by a conductive material. The conductive material may be any electron conductive substance and not particularly limited, and it is common to use, for example, carbon black such as furnace black and acetylene black, activated carbon, black lead and the like, either alone or in combination thereof. The content of the electrode catalyst can be normally 0.01 to 10 $mg/cm^2$, more preferably 0.1 to 5.0 $mg/cm^2$, in terms of the metal weight per unit area of the sheet-shaped catalytic electrode layer.

Said composition may be added with the electron conductivity imparter in order to enhance the electron conductivity of the catalytic electrode layer, and to obtain the excellent characteristic of the catalytic electrode layer produced according to the present production method. As the electron conductivity imparter, carbon black, graphite, carbon nanotube, carbon nanohorn and carbon fibers or so may be mentioned.

In the present invention, the ratio between the added amount of the non-crosslinked ion-conductive additive and the electrode catalyst in the catalytic electrode forming composition significantly affects the structure of the obtained catalytic electrode layer precursor; hence the selection thereof directly influences the electrochemical characteristic of the catalytic electrode layer. In case the ion-conductive additive is too little, the ionic-conductivity in the catalytic electrode layer becomes insufficient, thus it is not preferable. On the contrast, if it is too much, each individual electrode catalyst particles will be coated by thick ion-conductive additive, as a result, the contact between the particles against each other is deteriorated and the electron conductivity is lowered, thus it is not preferable. Therefore, it is extremely important to adjust the ionic-conductivity and the electron conductivity in the catalytic electrode layer within an appropriate range. In view of such point, although it differs depending on the structures such as the particles diameter and the specific surface area of the used electrode catalyst, and the used ion-conductive additive, should the mass ratio between the electrode catalyst and the ion-conductive additive be shown (the electrode catalyst mass/ the ion-conductive additive mass), it is preferably within the range of 99/1 to 40/60, and more preferably within the range of 95/5 to 50/50.

The catalytic electrode layer for anion-exchange membrane type fuel cell comprises the binder if needed. As the binder added depending on the needs, various thermoplastic resins are generally used. As the thermoplastic resins preferably used, for example polytetrafluoroethylene, polyvinylidene fluoride, tetrafluoroethylene-perfluoroalkyl vinyl ether copolymer, polyether ether ketone, polyether sulfone, styrene-butadiene copolymer, acrylonitrile-butadiene copolymer or so may be mentioned. The content ratio of the binder is preferably 5 to 25 mass% of the above mentioned catalytic electrode layer. Also, the binder may be used alone, or two or more may be combined for use.

The catalytic electrode forming composition is obtained by mixing the non-crosslinking ion-conductive additive, the electrode catalyst, and if needed the electron conductivity imparter, and the binder or so in the solvent. In order to obtain the high performance catalytic electrode layer, preferably the electrode catalyst is highly dispersed in said composition, thus as the method of mixing, the method wherein the highly dispersed electrode catalyst is preferably employed. As such method, a beads mill, a ball mill, a high pressure collision type disperser, a ultrasonic disperser or so may be mentioned, and it may be selected depending on the aggregation state of the used electrode catalyst and the energy necessary for the dispersion; and also the mixing condition such as the time and temperature or so may be determined as same.

Also, the viscosity of the catalytic electrode forming composition may be that suited for the coating method which will be described in below, and it is not particularly limited. The viscosity strongly depends on the dispersing state of the electrode catalyst and the amount of said solvent added to the composition. As the added amount of the solvent, generally it is determined so that the total mass of the non-crosslinking ion-conductive additive and the electrode catalyst is 0.1 to 10 mass%.

(The method of forming the catalytic electrode precursor layer)

For the production method of the catalytic electrode layer of the present invention, when said catalytic electrode forming composition is coated on the gas diffusion layer or the anion-exchange membrane, it is coated on the precursor of the ion exchange membrane comprising the haloalkyl group in some cases.

The coating method of the catalytic electrode forming composition is not particularly limited, and it may be determined based on the characteristic such as the desired catalytic electrode layer thickness according to the object to be coated. As such method, a spray coating method, a bar coating method, a roll coating method, a gravure printing method, a screen printing method or so may be mentioned.

The catalytic electrode precursor layer of after the coating according to the present invention is dried at appropriate temperature. The drying condition is not particularly limited, and it may be determined depending on the amount and the boiling point of the used solvent and within the range which does not cause the cracks or pinholes in the catalytic electrode layer during the drying. In general, drying is carried out under the temperature condition of 15 to 70°C and for 5 to 48 hours.

The thickness of the catalytic electrode layer formed on the object to be coated is not particularly limited, and it may be determined accordingly depending on the purpose of use. In general, it is preferably 0.1 to 50 μm, and more

preferably 0.5 to 20 μm.

As mentioned in above, the production method of the catalytic electrode layer of the present invention may coat said catalytic electrode composition to the gas diffusion layer or the anion-exchange membrane, and also it may be coated on the precursor of the anion-exchange membrane comprising the haloalkyl group.

First, the production method of forming the catalytic electrode precursor layer on the gas diffusion layer or the anion-exchange membrane is described.

(Forming the catalytic electrode precursor on the gas diffusion layer or the anion-exchange membrane)

The catalytic electrode precursor formed on the gas diffusion layer or the anion-exchange membrane may be quaternized and crosslinked in the solution at least comprising the polyamine compounds, particularly of the diamine compounds.

For the method for forming the precursor of the catalytic electrode layer, it is not to be limited by the object to be coated with the catalytic electrode forming composition; and the above mentioned methods may be used.

As the gas diffusion layer of the present invention, carbon papers, carbon cloths, expand mesh such as nickel and titanium or so, porosity metals, and porosity graphite or so may be mentioned, and it may be used without particular limitation. Generally, in case of using for the fuel cell, carbon papers and carbon cloths are preferably selected. Also, in case of using for the fuel cell, in order to easily discharge the water generated during the electric power generation to outside of the system, and in order to suppress the drying of the membrane-electrode assembly when using the drying gas or so; the gas diffusion layer may comprise the microporous layer made of carbon black and polytetrafluoroethylene or so as the binder, and it can be used without particular limitation in the present invention. This gas diffusion layer is not particularly limited, and the porous membrane made of carbon is preferable, for example carbon fiber woven fabric and carbon paper or so can be used. The thickness of the gas diffusion layer is preferably 50 to 300 μm, and the porosity thereof is preferably 50 to 90%. In the present invention, in case of forming the catalytic electrode layer by the post-crosslinking, this porous membrane made of carbon is preferably used. As for the reason of this, after the catalytic electrode precursor layer is formed, the catalytic electrode precursor layer and the polyamine compounds are contacted, but the porous membrane made of carbon does not deform such as swelling or so.

Also, in case of forming the catalytic electrode layer on the anion-exchange membrane, the known anion-exchange membrane can be used without particular limitation. Among the known anion-exchange membrane, the hydrocarbon based anion-exchange membrane is preferably used. Specifically, the membrane filled with the anion-exchange resin wherein the desired anion-exchange group introduced by a treatment such as amination and alkylation of chloromethylstyrene-divinylbenzene copolymer and a copolymer of vinylpyridine-divinylbenzene and the like to introduce the desired anion-exchange groups. These anion-exchange resin membranes are generally supported by base material such as woven fabric, unwoven fabric and porous membrane made from thermoplastic resin. Among these, as the base material, it is preferable to use base material comprising a porous membrane of thermoplastic resin such as polyolefin resin including polyethylene, polypropylene, polymethylpentene or so; fluorinated resin such as polytetrafluoroethylene, poly(tetrafluoroethylene-hexafluoropropylene) and polyvinylidene fluoride or so because the gas permeability is low and the membrane can be made thinner. Also, membrane thickness of the hydrocarbon based anion-exchange membrane may be normally 5 to 200 μm, more preferably 8 to 150 μm, in view of lowering electric resistance and giving necessary mechanical strength as a support membrane.

(The method of crosslinking and quaternizing reaction)

For the production method of the catalytic electrode layer for the anion-exchange membrane type fuel cell, the catalytic electrode precursor formed on the gas diffusion layer or the anion-exchange membrane is quaternized and crosslinked in the solution at least comprising the polyamine compounds.

In case of crosslinking the non-crosslinking ion-conductive additive with the polyamine compounds, there is an advantage that the size change of the ion-conductive additive at before and after the crosslinking reaction can be suppressed. This is because the non-crosslinking ion-conductive additive of the present invention already comprises the quaternary ammonium salt as the ion-exchange group, and the number of the ion-exchange group introduced during the crosslinking reaction is small. This advantage functions to suppress the size change during the production process of the catalytic electrode layer according to the production method of the catalytic electrode layer for the anion-exchange membrane type fuel cell of the present invention, which will be described in below, and effectively functions to obtain extremely high performance catalytic electrode layer.

As the polyamine compounds used in here, the compound comprising two or more amino groups as the nitrogen containing compounds may be mentioned, however preferably diamine, and triamine and tetramine are used, and particularly preferably diamine is used.

The polyamine compounds such as diamine, triamine and tetraamine or so can for example use the compounds

described in the patent document 2 (WO 2007/072842). Among these, alkyldiamine compounds, aromatic diamine compounds which are all tertiary amine; or alkyl triamine compounds and aromatic triamine compounds which are all tertiary amine; and further the polymers having the four or more alkylamine comprising the tertiary amine as the backbone or so may be mentioned.

Among these polyamine compounds, alkyl diamine compound is preferably used because the chemical stability after forming the crosslinking structure is good, and also has suitable flexibility. As the alkyl diamine compounds, ethylene diamine, propane diamine, butane diamine, pentane diamine, hexane diamine, heptane diamine, octane diamine, and cyclic alkyl diamine may be mentioned.

Specifically, as ethylene diamines, N-methylethylene diamine, N,N-dimethylethylene diamine, N,N,N'-trimethylethylene diamine, N,N,N',N'-tetramethylethylene diamine, N-ethylethylene diamine, N,N-diethylethylene diamine, N,N,N'-triethylethylene diamine, N,N,N',N'-tetraethylethylene diamine, N,N-dimethyl-N',N'-diethylethylene diamine, N-methyl-N'-ethylethylene diamine or so may be mentioned; as propane diamines, N-methylpropane diamine, N,N-dimethylpropane diamine, N,N,N'-trimethylpropane diamine, N,N,N',N'-tetramethylpropane diamine, N-ethylpropane diamine, N,N-diethylpropane diamine, N,N,N'-triethylpropane diamine, N,N,N',N'-tetraethylpropane diamine, N,N-dimethyl-N',N'-diethylpropane diamine, N-methyl-N'-ethylpropane diamine or so may be mentioned; as butane diamine, N-methylbutane diamine, N,N-dimethylbutane diamine, N,N,N'-trimethylbutane diamine, N,N,N',N'-tetramethylbutane diamine, N-ethylbutane diamine, N,N-diethylbutane diamine, N,N,N'-triethylbutane diamine, N,N,N',N'-tetraethylbutane diamine, N,N-dimethyl-N',N'-diethylbutane diamine, N-methyl-N'-ethylbutane diamine or so may be mentioned; as pentane diamines, N-methylpentane diamine, N,N-dimethylpentane diamine, N,N,N'-trimethylpentane diamine, N,N,N',N'-tetramethylpentane diamine, N-ethylpentane diamine, N,N-diethylpentane diamine, N,N,N'-triethylpentane diamine, N,N,N',N'-tetraethylpentane diamine, N,N-dimethyl-N',N'-diethylpentane diamine, N-methyl-N'-ethylpentane diamine or so may be mentioned; as hexane diamines, N-methylhexane diamine, N,N-dimethylhexane diamine, N,N,N'-trimethylhexane diamine, N,N,N',N'-tetramethylhexane diamine, N-ethylhexane diamine, N,N-diethylhexane diamine, N,N,N'-triethylhexane diamine, N,N,N',N'-tetraethylhexane diamine, N,N-dimethyl-N',N'-diethylhexane diamine, N-methyl-N'-ethylhexyl diamine or so may be mentioned; as heptane diamines, N-methylheptane diamine, N,N-dimethylheptane diamine, N,N,N'-trimethylheptane diamine, N,N,N',N'-tetramethylheptane diamine, N-ethylheptane diamine, N,N-diethylheptane diamine, N,N,N'-triethylheptane diamine, N,N,N',N'-tetraethylheptane diamine, N,N,-dimethyl-N',N'-diethylheptane diamine, N-methyl-N'-ethylheptane diamine or so may be mentioned; as octane diamines, N-methyloctane diamine, N,N-dimethyloctane diamine, N,N,N'-trimethyloctane diamine, N,N,N',N'-tetramethyloctane diamine, N,-ethyloctane diamine, N,N-diethyloctane diamine, N,N,N'-triethyloctane diamine, N,N,N',N'-tetraethyloctane diamine, N,N-dimethyl-diethyloctane diamine, N-methyl-N'-ethyloctance diamine or so may be mentioned; as cyclic alkyldiamines, piperazine, N-methyl piperazine, N,N'-dimethyl piperazine, N-ethyl piperazine, N,N'-diethyl piperazine, N-methyl-N'-ethyl piperazine, 1,4-diazabicyclooctabe or so may be mentioned. Also, as the aromatic diamine compounds, ortho- and para- phenylene diamine, diamino naphthalene, and bipyridine or so may be mentioned.

In order to efficiently form the crosslinking structure, among the diamine compounds, alkyl diamine compounds are preferable. After one terminal end of amine reacts with the halogenated alkyl, the other amine must react with further other halogenated alkyl; however since the aromatic amine comprises rigid molecular structure, the reactivity is significantly lowered. Also, among the alkyl diamine compounds, the alkyl diamine compounds comprising the tertiary amine at the both ends as shown by below formula (5) is preferable. The primary or secondary amine generally has extremely lower reactivity with the halogenated alkyl compared to the tertiary amine, hence the crosslinking structure cannot be formed efficiently. Also, the crosslinking structure formed after the reaction of the tertiary amine becomes the quaternary ammonium salt, thus this can contribute to improve the ionic-conductivity necessary for the ion-conductive additive.

[Chemical formula 10]

$$R^4R^5N(CH_2)_cNR^6R^7 \qquad (5)$$

The diamine compounds shown by the formula (5) constitutes the crosslinking part comprising the ion-exchange group of the ion-conductive additive comprising the crosslinking structure which is discussed in the above. Therefore, due to reasons mentioned in the above, in the above formula (5), the methylene chain length which binds two nitrogen atoms and expressed by "c" is the integer of preferably within the range of 2 to 8, and more preferably within the range of 2 to 6.

Also, in the formula (5), $R^4$, $R^5$, $R^6$ and $R^7$ are selected from the group consisting of hydrogen, methyl group and ethyl group; and preferably these are selected from the group consisting of methyl group and ethyl group.

The diamine compounds shown by the formula (5) forms the crosslinking structure having two quaternary ammonium salts by reacting with two halogenated alkyls comprised in the non-crosslinking ion-conductive additive. The

below formula schematically shows the reaction of forming the crosslinking structure; and two molecules of halogenated alkyls shown by $(CH_2)_bY$ (Y is the halogen atom, and any one of Cl, Br, and I) each reacts with the tertiary amine of the diamine compound terminal to carry out the quaternary ammonium salt forming reaction, thereby the crosslinking structure is formed.

[Chemical formula 11]

$$-(CH_2)_b Y \quad + \quad R^4R^5N\ (CH_2)_c\ N\ R^6R^7 \quad + \quad Y\,(CH_2)_b - \qquad (6)$$
$$\longrightarrow -(CH_2)_b N^+(X^-)R^4R^5(CH_2)_c N^+(X^-)R^6R^7(CH_2)_b -$$

In the above method, as for the method of contacting the polyamine compounds and the non-crosslinking ion-conductive additive, the method suitable for the catalytic electrode layer including the ion-conductive additive comprising the crosslinking structure of the present invention may be used.

The amount of the polyamine compounds used for the crosslinking structure formation may be determined accordingly depending on the type of the polyamine compounds and the haloalkyl group of included in the ion-conductive additive, the desired degree of the crosslinking, and the ion-exchange capacity or so. Specifically, if the total mol number of the haloalkyl group included in the ion-conductive additive is "n1", in case diamine compound is used as the polyamine compounds, the used amount thereof is preferably 0.1 mol times or more of "n1", and more preferably 0.5 mol times or more. The total mol number of the amino group included in the polyamine compounds with respect to the total mol number (n1) of the haloalkyl group is preferably 0.05 times or more, and more preferably 0.2 to 2.0 times.

In the present invention, when producing the ion-conductive additive comprising the crosslinking structure by reacting the non-crosslinking ion-conductive additive with the polyamine compounds, the tertiary amine which is the monofunctional quaternizing agent may be used together. The monofunctional quaternizing agent does not form the crosslinking structure, thus it can be used to regulate the crosslinking density.

As the tertiary amine, trimethyl amine, triethyl amine, dimethylethyl amine, dimethylpropyl amine, dimethylbutyl amine, dimethylpentyl amine, dimethylhexyl amine, dimethylheptyl amine, dimethyloctyl amine, diethylmethyl amine, diethylpropyl amine, diethylbutyl amine, diethylpentyl amine, diethylhexyl amine, diethylheptyl amine, diethyloctyl amine, ethylmethylpropyl amine, ethylmethylbutyl amine, ethylmethylpentyl amine, ethylmethylhexyl amine, ethylmethylheptyl amine, ethylmethyloctyl amine or so may be mentioned.

From the point of high reactivity and easiness to obtain, as the tertiary amine, trimethyl amine, triethyl amine, dimethylbutyl amine, dimethylhexyl amine, dimethyloctyl amine, diethylbutyl amine, diethylhexyl amine, diethyloctylamine are preferably used.

In case of using the tertiary amine together, any of the method of contacting the non-crosslinking ion-conductive additive with the mixture of the polyamine compound and the tertiary amine; the method of first contacting the tertiary amine and then contacting the diamine compound, and the method of contacting the polyamine compound and then contacting the tertiary amine may be used.

The used amount of the tertiary amine may be determined depending on the ratio between the polyamine compounds used together according to the desired crosslinking degree. However, if the monofunctional quaternizing agent reacts too much with respect with the haloalkyl group, as already mentioned, the swelling of the ion-conductive additive during the post-crosslinking becomes large, thus the swelling suppression effect during the crosslinking reaction of which the ion-conductive additive of the present invention have, may not be exhibited. Therefore, when using the tertiary amine and the polyamine compounds at the same time or using together in a stepwise manner, the tertiary amine participating in the reaction is preferably 0.9 mol or less, and more preferably 0.5 mol or less with respect to 1 mol of haloalkyl group of the ion-conductive additive.

Note that, the used amount of the polyamine compound and the tertiary amine used depending on the needs has the total amount thereof which is the equivalent mol or more with respect to the haloalkyl group comprised in the non-crosslinking ion-conductive additive.

Also, the solution including the polyamine compound may comprise the solvent. However, in case of not using the tertiary amine, that is only the polyamine compounds are used for reaction, then it is preferable to not to use the solvent because the polyamine compound during the reaction does not change and does not give influence to the reaction speed.

The solvent can be selected without particular limitation as long as the constituting component of the catalytic electrode precursor does not dissolve, and water, alcohols such as methanol, ethanol, propanol or so, ketones such as acetone or so are preferably used.

The reaction temperature is preferably 15°C to 40°C, and the reaction time is preferably 5 hours to 48 hours, and more preferably 5 hours to 24 hours from the point of increasing the productivity.

After contacting the catalytic electrode precursor layer and the polyamine compounds, the excessive polyamine compounds can be removed by washing process.

Further, in case the counter ions are the halogen atom, it can be converted to hydroxide ion, bicarbonate ion, carbonate ion or so. The method of converting is not particularly limited, and known methods can be used. After the conversion of the counter ions, the excessive ions may be removed by washing.

Next, the case wherein the precursor of the catalytic electrode is formed on the precursor of the ion-exchange membrane is described.

(Forming the catalytic electrode precursor layer on the precursor of the anion-exchange membrane)

According to the present invention, the catalytic electrode layer can be formed by first forming the precursor of the catalytic electrode layer on the precursor of the ion-exchange membrane comprising the haloalkyl group, and then carrying out the quaternization and crosslinking reaction in the solution at least including the polyamine compounds.

According to the present invention, not only the ion-conductive additive in the catalytic electrode layer, but also the haloalkyl group comprised in the non-crosslinking ion-conductive additive included in the precursor of the catalytic electrode layer, and the haloalkyl group comprised in the ion-exchange membrane precursor undergoes the crosslinking reaction due to the polyamine. Therefore, the production method of the catalytic electrode layer for the anion-exchange membrane type fuel cell of the present invention is also the production method of the membrane-electrode assembly wherein the catalytic electrode layer and the anion-exchange membrane are crosslinked.

The precursor of the anion-exchange membrane comprising the haloalkyl group refers to the precursor of the ion-exchange membrane comprising the functional group capable of introducing the ion-exchange group produced by the production method of the known anion-exchange membrane. For example, the precursor of hydrocarbon based anion-exchange membrane may be mentioned, and specifically the membrane filled with the copolymer such as chloromethylstyrene-divinylbenzene copolymer, boromobutylstyrene-divinylbenzene copolymer or so may be mentioned. These copolymers included in the precursor of the anion-exchange membrane are generally supported by base material such as woven fabric, unwoven fabric and porous membrane made from thermoplastic resin. Among these, as the base material, it is preferable to use the base material made of the porous membrane made of thermoplastic resin for example of polyolefin resins such as polyoctane, polypropylene, polymethylpentene or so; and fluorine based resins such as polytetrafluorooctane, poly(tetrafluorooctanehexafluoropropylene), polyvinylidene fluoride or so, since these have low gas permeability and capable to make thin membrane. Also, membrane thickness of the hydrocarbon-based anion-exchange membrane may be, normally 5 to 200 μm, more preferably 8 to 150 μm, from the point of lowering electric resistance and giving necessary mechanical strength as a support membrane.

According to the present invention, the quaternization and crosslinking reaction of the catalytic electrode precursor layer formed on the precursor of the anion-exchange membrane is preferably carried out under the same condition as the quaternization and crosslinking reaction of the catalytic electrode precursor layer formed on said gas diffusion layer or anion-exchange membrane.

(The anion-exchange membrane type fuel cell)

The membrane-electrode assembly (the state wherein 5 and 8; 7 and 8; or 5 and 8 and 7 of Fig.1 are combined) wherein the catalytic electrode layer (5 and 7 of Fig.1) and the anion-exchange membrane (8 of the Fig.1)of the present invention are stacked can be suitably used for the anion-exchange membrane type fuel cell. As mentioned in the above, the membrane-electrode assembly of the present invention can be obtained by coating and drying the catalytic electrode forming composition including the ion-conductive additive and the catalyst on the anion-exchange membrane or on the precursor of the anion-exchange membrane to form the catalytic electrode precursor layer, then carrying out the quaternization and crosslinking reaction by contacting at least with polyamine compounds.

The gas diffusion electrode (the state wherein 4 and 5; or 6 and 7 of Fig 1 are combined) wherein the catalytic electrode (5 or 7 of Fig.1)and the gas diffusion layer (4 or 6 of Fig.1)of the present invention are stacked can be suitably used for the anion-exchange membrane type fuel cell. As mentioned in the above, the gas diffusion electrode of the present invention can be obtained by coating and drying the catalytic electrode forming composition including the ion-conductive additive and the catalyst to form the catalytic electrode precursor layer, then carrying out the quaternization and crosslinking reaction by contacting at least with polyamine compounds.

Further, the membrane-electrode assembly and the gas diffusion electrode of the present invention can be suitably used as the anion-exchange membrane type fuel cell.

By using the gas diffusion electrode or the membrane-electrode assembly as discussed in the above, for example the anion-exchange membrane type fuel cell having the constitution shown by Fig.1 can be assembled.

That is, in case the catalytic electrode layer is formed on the gas diffusion layer, by using two of these, the ion-exchange membrane is sandwiched at the side the catalytic electrode layer is formed. Thereby, the state wherein 4, 5,

6, 7 and 8 of Fig.1 are assembled can be realized. Alternatively, in case the catalytic electrode layer is directly formed on both surface of the ion-exchange membrane or on the precursor thereof, after the crosslinking and the quaternization, this can be used as the fuel cell directly. Alternatively, in order to enhance the gas dispersibility, by stacking the supporting body (the carbon made porous membrane) which functions as the gas diffusion layer on the catalytic electrode layer, the fuel cell can be constituted.

The below examples will be described referring to the case using the constitution of Fig.1 which uses hydrogen as fuel. This fuel cell constitution supplies the humidified hydrogen gas to the fuel chamber side, and supplies the humidified oxygen or air to the air chamber side; thereby generates the electric power. There are optimum values for each flow rate amount, thus the voltage and current values when applying certain load are measured, and these can be set so that these values shows the largest value. The humidification is carried out in order to prevent the lowering of the ionic-conductivity due to the drying of the ion-exchange membrane and the catalytic electrode layer, similarly this can be optimized as well. The higher the reaction temperature inside the fuel cell is, the higher output can be obtained, however if the temperature is too high, the deterioration of the catalytic electrode layer is promoted, thus it is usually used at the temperature of room temperature to 100°C or less.

## EXAMPLES

Hereinafter, the present invention will be described using the examples; however the present invention is not to be limited thereto. Note that, the characteristics of the partially quaternized styrene-based copolymer, the ion-conductive additive and the fuel cell are the values measured according to the method described in below.

(The ion-exchange capacity of the partially quaternized styrene-based copolymer)

The solution in which the partially quaternized styrene-based copolymer is dissolved (the concentration of 5.0 mass%, the solution amount of 2.5 g, the hydrogencarobnate ion type) was casted on the petri dish made of polytetrafluoroethylene, thereby the cast film was made. This cast film which was produced in above and the ion-exchange water were together introduced into the visking tube (made of cellulose, the cutoff molecular weight of 8,000) which was in advance thoroughly washed by the ion-exchange water and vacuum dried for 3 hours at 50°C and measured the mass (Dv(g)); then the both ends were tied. This tube was immersed for 30 minutes in 0.5 mol/L - HCl solution (50 ml), and this procedure was repeated for 3 times, thereby the cast film of inside was made to chloride ion type. Further, this was immersed in the ion-exchange water (50 ml) for 10 minutes for washing (10 times). Then, this was immersed for 30 minutes or longer in 0.2 mol/L - $NaNO_3$ solution (50 ml) to substitute to nitrate ion type then the released chloride ions were extracted (4 times). The extracted chloride ions were collected by further immersing for 30 minutes or longer in the ion-exchange water (50 ml) (2 times). The solution which was extracted with these chloride ion was collected, then quantified by a potentiometric titrator using silver nitrate solution (COMTITE-900 made by Hiranuma Sangyo Co., Ltd.) ("A" mol). Next, the membrane of after titration was immersed in 0.5 mol/L - NaCl solution (50 g) for 30 minutes or longer (3 times), and thoroughly washed with the ion-exchange water until the chloride ions were not detected, then the tube was taken out. Then, the water inside the tube was removed by placing it in the drier of 50°C for 15 hours, and the mass (Dt (g)) thereof was measured after vacuum dried for 3 hours at 50°C. Based on the above mentioned measured value, the ion-exchange capacity was determined from the following equation.

$$\text{Ion-exchange capacity} = A \times 1000 / (Dt - Dv)\ [\text{mmol/g-dried mass}]$$

(The method of measuring the water content of the partially quaternized styrene-based styrene-based copolymer)

The cast film produced by the above mentioned method having the thickness of 50 to 70 μm or so was set in the measuring apparatus ("MSB-AD-V-FC" made by MicrotracBel) comprising the constant temperature and humidity bath equipped with a magnetic floating balance. First, the membrane mass (Ddry (g)) of after vacuum drying for 3 hours at 50°C was measured. Next, the temperature of the thermostat bath was set to 40°C, and the relative humidity was maintained at 90%, and the membrane mass (D (g)) at the point of which the mass difference of the membrane was 0.02%/60 seconds or less was measured. Based on the above mentioned measured value, the water content was obtained from the following equation.

$$\text{Water content at the relative humidity of 90\%} = (D - Ddry) / Ddry) \times 100\ [\%]$$

(The method of determining the content ratio of the constituent unit comprising the quaternary base type anion-exchange group or the constituent unit comprising the haloalkyl group included in the partially quaternized styrene-based copolymer)

First, the partially quaternized styrene-based copolymer was dissolved in the commercially available deuterated chloroform at the concentration of 1 to 3 mass%, then 1 H-NMR measurement was carried out, thereby the quaternary base type anion-exchange group and the structure of the haloalkyl group introduced in the polymer were determined.

The amount of the quaternary base type anion-exchange group in the partially quaternized styrene-based copolymer can be determined from the ion-exchange capacity measurement, therefore the content of the constituent unit comprising the quaternary base type anion-exchange group included in the styrene-based copolymer was calculated by multiplying the molecular weight of the monomer part corresponding to the ion-exchange capacity. Also, regarding the haloalkyl group, the corresponding halogen type was determined by X-ray fluorescent measurement, then quantified by a flask combustion method. The content (mmol/g) of the halogen in the polymer per unit mass obtained by the flask combustion method was equal to the content (mmol/g) of the constituent unit comprising the haloalkyl group, thus it was calculated by multiplying the molecular weight of the monomer part corresponding to the constituent unit comprising the haloalkyl group.

(The method of measuring the ion-exchange capacity of the ion-conductive additive comprising the crosslinking structure included in the catalytic electrode layer)

In order to measure the ion-exchange capacity of the ion-conductive additive comprising the crosslinking structure included in the catalytic electrode layer which is formed on the gas diffusion layer, the ion-exchange membrane, or the precursor of the ion-exchange membrane, only the catalytic layer of 23 mm square (about 5 $cm^2$) was scraped off by spatula to make the measuring sample.

The obtained measuring sample and the ion-exchange water were together introduced into the visking tube (made of cellulose, the cutoff molecular weight of 8,000) which was in advance thoroughly washed by the ion-exchange water and vacuum dried for 3 hours at 50°C and measured the mass (Dv(g)); then the both ends were tied. This tube was immersed for 10 hours or longer in HCl solution of 1 (mol/l) to make into chlorine ion type, then substituted to nitrate ion type by $NaNO_3$ solution of 1 (mol/l); thereby the released chlorine ions were quantified using ion chromatography (ICS-2000 made by Nippon Dionex K.K.).

The analysis condition was as set in below.

Analysis column: IonPac AS-17 (made by Nippon Dionex K.K.)
Elution: 35 (mmol/L) KOH solution 1 ml/min
Colum temperature: 35°C

Here, the quantitative value was defined as A1 (mol). Next, the same sample was immersed for 4 hours or longer in 1 (mol/l) HCl solution, and vacuum dried for 5 hours at 60°C, then the mass WO (g) was measured which was the total weight of the visking tube and the measurement sample. When the mass of the measurement sample is W1 (g), then W1 (g) can be calculated from (WO - Dv) (g). The mass of the ion-conductive additive included in the measurement sample can be calculated by subtracting W1 (g) from the mass Wc (g) of the catalyst included per 23 mm square (about 5 $cm^2$) of the catalyst layer area of before obtaining the sample.

Based on the above measurement value, the ionic-exchange capacity of the ion-conductive additive was determined from the following equation.

$$\text{Ion-exchange capacity} = (A1 \times 1000 /(W1 - Wc))\ [\text{mmol/g}]$$

(The method of determining the content ratio of the constituent unit comprising the quaternary base type anion-exchange group and the content ratio of the constituent unit comprising crosslinking structure in the ion-conductive additive comprising the crosslinking structure)

The ion-exchange capacity of the ion-conductive additive comprising the crosslinking structure included in the above mentioned catalytic electrode layer was set as IEC1. IEC1 was defined as the mol number of entire ammonium salts included in the ion-conductive additive of unit mass. Here, the mol number of only the quaternary ammonium salt included in said imparter of unit mass was measured as IEC2. Using sample measured with IEC1, it was immersed for 5 hours or longer in NaOH solution of 1 (mol/l) to convert the lower ammonium salt which is tertiary or less to amine. Then, it was immersed in NaCl solution of 1 (mol/l) to make chlorine ion type, followed by substituting to nitrate ion type by immersing in $NaNO_3$ solution of 1 (mol/l), then the released chlorine ions were quantified by the ion chromatography.

This quantitative value was defined as A2 (mol). Next, the sample was immersed in 1 (mol/l) NaCl solution for 4 hours or longer, then it was vacuum dried for 5 hours at 60°C to measure the mass thereof. The mass at this point was defined as W2 (g). The amount of the ion-conductive additive included in the sample can be calculated by subtracting W2 (g) from the catalyst amount Wc (g) included per 23 mm square (about 5 $cm^2$) of the catalyst layer area of before obtaining the sample.

Based on the above measurement value, the mol number (IEC2) of only the quaternary ammonium salt included in the ion-conductive additive of unit mass was obtained from the below equation.

$$IEC2 = (A2 \times 1000 / (W2 - Wc)) \text{ [mmol/g]}$$

In the partially quaternized styrene-based copolymer used for forming the catalytic electrode precursor layer, when the content of the constituent unit comprising said quaternary base type anion-exchange group is $\omega_Q$ (mass%), the molecular weight of the constituent unit is $M_Q$, and similarly the content of the constituent unit comprising the haloalkyl group is $\omega_H$ (mass%), the molecular weight of the constituent unit is $M_H$, and the molecular weight $M_{DA}$ of the diamine used for forming the crosslinking of the ion-conductive additive; then the content ratio $C_Q$ of the constituent unit comprising the quaternary base type ion-exchange group in the ion-conductive additive comprising the crosslinking structure, and the content ratio $C_{CL}$ of the constituent unit comprising the crosslinking structure can be calculated from the below equations.

$$C_Q = (\omega_Q / (1 + (\omega_H / 200) \times (M_{DA} / M_H))) \times 100 \text{ [mass \%]}$$

$$C_{CL} = (((\omega_H / 200) \times (M_{DA} + 2M_H) / M_H) / (1 + (\omega_H / 200) \times (M_{DA} / M_H))) \times 100 \text{ [mass\%]}$$

(The method of measuring the water content of the ion-conductive additive comprising the crosslinking structure included in the catalytic electrode layer)

The same sample as for the ion-exchange capacity measurement of the ion-conductive additive comprising the crosslinking structure included in the catalytic electrode layer was used. The sample was placed in the vacuum oven, and dried for 12 hours under reduced pressure of 10 mmHg at 50°C, then the mass thereof was measured (defined as W1). As similar to the measurement of the ion-exchange capacity, when the catalyst amount included per 23 mm square (about 5 $cm^2$) of the catalyst layer area of before obtaining the sample was Wc (g), the mass of only the ion-conductive additive can be calculated by (W1 - Wc) (g). Further, this gas diffusion electrode was left for 12 hours in the glove box adjusted to 90%RH and 40°C to allow the water to be absorbed, then the mass thereof was measured (defined as W3). Here, assuming that the absorbed water was entirely absorbed by the ion-conductive additive comprising the crosslinking structure, then the water content at the relative humidity of 90% can be calculated from the below equation.

$$\text{The water content at the relative humidity of 90\%} = (W3 - W1) / (W1 - Wc) \times 100 \text{ [\%]}$$

(The method of assembling the fuel cell)

In case the gas diffusion electrode was formed by forming the catalytic electrode layer on the gas diffusion layer, the gas diffusion electrode was cut into 23 mm square (about 5 $cm^2$), then this gas diffusion electrodes were respectively placed so that the catalytic electrode layers of the gas diffusion electrodes contact to both sides of the ion-exchange membrane (the anion-exchange capacity of 1.8 mmol/g - dry base, the water content at 25°C of 25 mass%, and the dry membrane thickness of 25 $\mu$m, the outer size of 40 mm square), then this was placed in the fuel cell shown in Fig.1. Also, when the catalytic electrode layer was formed on the ion-exchange membrane or on the precursor thereof, that is when the membrane-electrode assembly was formed, by using two gas diffusion layers (HGP-H-060, the thickness of 200 $\mu$m made by TORAY INDUSTRIES, INC) which were cut into the size of 23 mm square (about 5 $cm^2$), this was stacked on both sides of the catalytic electrode layer respectively of the above mentioned membrane-electrode assembly, thereby it was placed in the fuel cell shown in Fig.1.

(The method of testing the electric power output)

As the fuel gas, 100 ml/min of hydrogen humidified to 100% RH at 60°C, and as the oxidant gas, 200 ml/min of air humidified to 100% RH at 60°C were supplied to the fuel cell. The temperature of the fuel cell was set to 80°C. Then, the cell voltage (V) was measured when electric current of 500 $mAcm^{-2}$ was taken from this cell. Also, the cell resistance ($\Omega \cdot cm^2$) at 500 $mAcm^{-2}$ was measured by an alternating current impedance method at the same time of the voltage measurement.

(The method of synthesizing the partially quaternized styrene-based copolymer)

20 g of polystyrene (the number average molecular weight of 70,000) was dissolved in 1000 ml of chloroform, then 100 g of chloromethylethylether, 100 g of tin chloride anhydride $SnCl_4$ were added while being ice-cooled, then reacted for 3 hours at 100°C. Next, the polymer product was precipitated using large amount of methanol and separated, thereby the chloromethylated resin was obtained by vacuum drying. According to the analysis by $^1$H-NMR, it was confirmed that all the styrene parts in the resin were chloromethylated. Also, according to the result of the element analysis, the chloromethyl groups included in the resin per unit mass was 6.5 mmol/g, and it was verified to be equal as the theoretical value when all of styrene parts are chloromethylated. 5 g of the obtained chloromethylated resin was reacted with 4.8 g of 20 mass% trimethylamine/methanol solution in the chloroform for 24 hours at 25°C, then the resin was precipitated using large amount of methanol, and filtered, thereby the partially quaternized styrene-based copolymer 1 was obtained. Regarding the partially quaternized styrene-based copolymer, the content ratio of the constituent unit comprising the quaternary base type anion-exchange group and the remaining constituent unit comprising the haloalkyl group were determined from $^1$H-NMR and the results are shown in Table 1. Also, in Table 1, results of measurements of the ion-exchange capacity and the water content regarding the copolymer are also shown.

(The method of synthesizing the partially quaternized styrene-based copolymer 2)

5 g of the chloromethylated resin as same as the one obtained during the production of the styrene-based copolymer 1 was reacted with 7.8 g of 20 mass% trimethylamine/methanol solution in the chloroform for 24 hours at 25°C, then the resin was precipitated using large amount of methanol, and filtered, thereby the partially quaternized styrene-based copolymer 2 was obtained. Regarding the copolymer, results of measurements of the content ratio of the constituent unit comprising the quaternary base type anion-exchange group and the remaining constituent unit comprising the haloalkyl group, the ion-exchange capacity, and the water content are shown in Table 1.

(The method of synthesizing the partially quaternized styrene-based copolymer 3)

5 g of the chloromethylated resin as same as the one obtained during the production of the styrene-based copolymer 1 was reacted with 3.0 g of dimethyl(n-butyl)amine in the chloroform for 24 hours at 25°C, then the resin was precipitated using large amount of methanol, and filtered, thereby the partially quaternized styrene-based copolymer 3 was obtained. Regarding the copolymer, results of measurements of the content ratio of the constituent unit comprising the quaternary base type anion-exchange group and the remaining constituent unit comprising the haloalkyl group, the ion-exchange capacity, and the water content are shown in Table 1.

(The method of synthesizing the partially quaternized styrene-based copolymer 4)

30 g of bromobutylstyrene was subjected to a radical polymerization in toluene solution by benzoyl peroxide, thereby a linear polybromobutylstyrene (the number average molecular weight 80,000) was obtained. 5 g of obtained linear polybromobutylstyrene was reacted with 5.7 g of 20 mass% trimethylamine/methanol solution in chloroform for 24 hours at 25°C, then the resin was precipitated using large amount of methanol, and filtered, thereby the partially quaternized styrene-based copolymer 4 was obtained. Regarding the copolymer, results of measurements of the content ratio of the constituent unit comprising the quaternary base type anion-exchange group and the remaining constituent unit comprising the haloalkyl group, the ion-exchange capacity, and the water content are shown in Table 1.

(The method of synthesizing the partially quaternized styrene-based copolymer 5)

20 g of styrene-based elastomer which is polystyrene-poly(ethylene-butylene)-polystyrene triblock copolymer (the number average molecular weight 50,000, the aromatic (styrene) content of 40 mass%, the hydrogenation rate 99%) was dissolved in 1000 ml of chloroform, then 100 g of chloromethylethylether, 100 g of tin chloride anhydride $SnCl_4$ were added while being ice-cooled, then reacted for 3 hours at 100°C. Next, the polymer product was precipitated using

large amount of methanol and separated, thereby the resin being chloromethylated was obtained by vacuum drying. According to the analysis by $^1$H-NMR, it was confirmed that all the styrene parts in the resin were chloromethylated. Also, according to the result of the element analysis, the chloromethyl group included in the resin per unit mass was 3.2 mmol/g, and it was verified to be same as the theoretical value when all of styrene parts are chloromethylated.

5 g of the obtained chloromethylated resin was reacted with 3.3 g of 20 mass% of trimethylamine/methanol solution in the chloroform for 24 hours at 25°C, then the resin was precipitated using large amount of methanol, and filtered, thereby the partially quaternized styrene-based copolymer 5 was obtained. Regarding the obtained styrene-based copolymer, the content ratio of the constituent unit comprising the quaternary base type anion-exchange group and the remaining constituent unit comprising the haloalkyl group were determined from $^1$H-NMR and the results are shown in Table 1. Also, in Table 1, the results of measurements of the ion-exchange capacity and the water content regarding the copolymer are also shown.

(The method of synthesizing the partially quaternized styrene-based copolymer 6)

5 g of the chloromethylated resin as same as the one obtained during the production of the styrene-based copolymer 5 was reacted with 4.3 g of 20 mass% trimethylamine/methanol solution in chloroform for 24 hours at 25°C, then the resin was precipitated using large amount of methanol, and filtered, thereby the styrene-based copolymer 2 was obtained. Regarding the copolymer, the results of measurements of the content ratio of the constituent unit comprising the quaternary base type anion-exchange group and the remaining constituent unit comprising the haloalkyl group, the ion-exchange capacity, and the water content are shown in Table 1.

**Example 1**

1 g of the partially quaternized styrene-based copolymer 1 was dissolved in 100 ml chloroform, then 2 g of catalyst (the platinum particle of the particle diameter of 2 to 10 nm being supported on the carbon particle having the primary particle diameter of 30 to 50 nm) was added and dispersed, thereby the catalytic electrode forming composition was prepared. This was coated on the gas diffusion layer (the carbon paper TGPH-060, the thickness of 200 μm made by TORAY INDUSTRIES, INC) so that the platinum was 0.5 $mgcm^{-2}$ in the size of 23 mm square (about 5 $cm^2$), then dried; thereby the gas diffusion layer on the catalytic electrode precursor layer was obtained. The catalytic electrode precursor layer was immersed in 50 g of diamine compounds (N,N,N',N'-tetramethyl-1,4-butanediamine). After 24 hours, it was taken out, and washed; thereby the gas diffusion electrode was obtained. The obtained gas diffusion electrode was immersed 5 times for 15 minutes in the 1 mol/L of potassium bicarbonate solution to exchange the counter ion to bicarbonate ion, and after washing with the ion-exchange water, it was dried for 24 hours. For the dried gas diffusion electrode, the thickness of the catalytic electrode layer was 5 μm. For the obtained gas diffusion electrode, the ion-exchange capacity and the water content of the ion-conductive additive comprising the crosslinking structure, and the content ratio of the constituent unit comprising the quaternary base type anion-exchange group and the constituent unit comprising the crosslinking structure of the ion-conductive additive comprising the crosslinking structure were evaluated. Here, IEC1 (the ion exchange capacity of the ion-conductive additive comprising the crosslinking structure) and IEC2 (the mol number of the quaternary base type anion-exchange group included in the ion-conductive additive comprising the crosslinking structure) were compared, and both values were the same. Further, all of the examples and the comparative examples which are described in below also showed the same values for both. This means that the entire haloalkyl group comprised in the partially quaternized styrene-based copolymers included in the catalytic electrode precursor layer reacted with the diamine compounds and formed the crosslinking structure. Also, using the obtained gas diffusion electrode, the electric power output test was carried out. The results are shown in Table 3.

**Examples 2 to 6**

The same procedures as the example 1 was carried out except that the partially quaternized styrene-based copolymer shown in Table 2 was used, thereby the gas diffusion electrode was prepared. The thickness of the catalytic layers of the prepared gas diffusion electrodes were all 5 μm. The obtained gas diffusion electrode was washed with the ion-exchange water, then it was dried for 24 hours. For the gas diffusion electrode of after the drying, the thickness of the catalytic electrode layer was 5 μm. For the obtained gas diffusion electrode, the ion-exchange capacity and the water content of the ion-conductive additive comprising the crosslinking structure, and the content ratio of the constituent unit comprising the quaternary base type anion-exchange group and the constituent unit comprising the crosslinking structure in the ion-conductive additive comprising the crosslinking structure were evaluated. The results are shown in Table 3. Also, using the obtained gas diffusion electrode, the electric power output test was carried out. The results are shown in Table 3.

**Examples 7 to 9**

The same procedures as the example 1 was carried out except that the partially quaternized styrene-based copolymer shown in Table 2 was used, and N,N,N',N'-tetramethyl-1,6-hexane diamine as the diamine compound was used; thereby the gas diffusion electrode was prepared. The obtained gas diffusion electrode was washed with the ion-exchange water, then it was dried for 24 hours. For the dried gas diffusion electrode, the thickness of the catalytic electrode layer was 5 μm. For the obtained gas diffusion electrode, the ion-exchange capacity and the water content of the ion-conductive additive comprising the crosslinking structure, and the content ratio of the constituent unit comprising the quaternary base type anion-exchange group and the constituent unit comprising the crosslinking structure of the ion-conductive additive comprising the crosslinking structure were evaluated. The results are shown in Table 3. Also, using the obtained gas diffusion electrode, the electric power output test was carried out. The results are shown in Table 3.

**Examples 10 to 12**

The catalytic electrode forming composition was prepared as same as the example 1 except for using the partially quaternized styrene-based copolymer shown in Table 2. This was coated on the ion-exchange membrane (the anion-exchange capacity of 1.8 mmol/g, the water content at 25°C of 25 mass%, and the dry membrane thickness of 25 μm, the outer size of 40 mm square) so that the platinum was 0.5 $mgcm^{-2}$ in the size of 23 mm square (about 5 $cm^2$), then dried; thereby catalytic electrode precursor layer was obtained. The catalytic electrode precursor layer was immersed in 50 g of diamine compound N,N,N',N'-tetramethyl-1,6-hexane diamine. After 24 hours, it was taken out, and washed; thereby the membrane-electrode assembly was obtained. The obtained membrane-electrode assembly was immersed 5 times for 15 minutes in potassium bicarbonate solution of 1 mol/L to exchange the counter ions to bicarbonate ions, and it was dried for 24 hours. For the dried membrane-electrode assembly, the thickness of the catalytic electrode layer was 5 μm. The obtained membrane-electrode assembly was washed with the ion-exchange water, then it was dried for 24 hours. For the membrane-electrode assembly, the thickness of the catalytic electrode layer was 5 μm. For the obtained membrane-electrode assembly, the ion-exchange capacity and the water content of the ion-conductive additive comprising the crosslinking structure, and the content ratio of the constituent unit comprising the quaternary base type anion-exchange group and the constituent unit comprising the crosslinking structure of the ion-conductive additive comprising the crosslinking structure were evaluated. The results are shown in Table 3. Also, using the obtained membrane-electrode assembly, the electric power output test was carried out. The results are shown in Table 3.

**Examples 13 to 15**

The catalytic electrode forming composition was prepared as same as the example 1 except for using the partially quaternized styrene-based copolymer shown in Table 2. This was coated on the ion-exchange membrane precursor (the chloromethyl group content of 2.2 mmol/g, the membrane thickness of 25 μm, and the outer size of 40 mm square) so that the platinum was 0.5 $mgcm^{-2}$ in the size of 23 mm square (about 5 $cm^2$), then dried; thereby the catalytic electrode precursor layer was obtained.

The catalytic electrode precursor layer was immersed in 50 g of diamine compound N,N,N',N'-tetramethyl-1,6-hexane diamine. After 24 hours, it was taken out, and washed; thereby the membrane-electrode assembly was obtained.

The obtained membrane-electrode assembly was immersed 5 times for 15 minutes in potassium bicarbonate solution of 1 mol/L to exchange the counter ions to bicarbonate ions, and it was dried for 24 hours. For the dried membrane-electrode assembly, the thickness of the catalytic electrode layer was 5 μm. The prepared membrane-electrode assembly was washed with the ion-exchange water, then it was dried for 24 hours. The dried membrane-electrode assembly had the thickness of 5 μm. For the obtained membrane-electrode assembly, the ion-exchange capacity and the water content of the ion-conductive additive comprising the crosslinking structure, and the content ratio of the constituent unit comprising the quaternary base type anion-exchange group and the constituent unit comprising the crosslinking structure of the ion-conductive additive comprising the crosslinking structure were evaluated. The results are shown in Table 3. Also, using the obtained membrane-electrode assembly, the electric power output test was carried out. The results are shown in Table 3.

**Comparative example 1**

The gas diffusion electrode was produced as same as the example 1 except for using poly(chloromethyl styrene) (the number average molecular weight of 80,000) instead of the partially quaternized styrene-based copolymer. The obtained gas diffusion electrode was washed with the ion-exchange water, then it was dried for 24 hours. For the dried gas diffusion electrode, the thickness of the catalytic electrode layer was 5 μm. For the obtained gas diffusion electrode, the ion-exchange capacity and the water content of the ion-conductive additive comprising the crosslinking structure,

and the content ratio of the constituent unit comprising the quaternary base type anion-exchange group and the constituent unit comprising the crosslinking structure of the ion-conductive additive comprising the crosslinking structure were evaluated. The results are shown in Table 3. Also, using the obtained gas diffusion electrode, the electric power output test was carried out. The results are shown in Table 3.

**Comparative example 2**

The gas diffusion electrode was produced as same as the example 1 except for using poly(bromobutyl styrene) (the number average molecular weight of 90,000) instead of the partially quaternized styrene-based copolymer. The obtained gas diffusion electrode was washed with the ion-exchange water, then it was dried for 24 hours. For the dried gas diffusion electrode, the thickness of the catalytic electrode layer was 5 μm. For the obtained gas diffusion electrode, the ion-exchange capacity and the water content of the ion-conductive additive comprising the crosslinking structure, and the content ratio of the constituting unit comprising the quaternary base type anion-exchange group and the constituting unit comprising the crosslinking structure of the ion-conductive additive comprising the crosslinking structure were evaluated. The results are shown in Table 3. Also, using the obtained gas diffusion electrode, the electric power output test was carried out. The results are shown in Table 3.

**Example 16**

1 g of poly(chloromethyl styrene) (the number average molecular weight 80,000) was dissolved in 100 ml chloroform, then 2 g of catalyst (the platinum particle of the particle diameter of 2 to 10 nm being supported on the carbon particle having the primary particle diameter of 30 to 50 nm) was added and dispersed, thereby the catalytic electrode forming composition was prepared. This was coated on the gas diffusion layer (the carbon paper TGPH-060, the thickness of 200 μm made by TORAY INDUSTRIES, INC) so that the platinum was 0.5 $mgcm^{-2}$ in the size of 23 mm square (about 5 $cm^2$), then dried; thereby the gas diffusion layer on the catalytic electrode precursor layer was obtained. The catalytic electrode precursor layer was immersed in 50 g of 20 mass% trimethylamine solution, then taken out after 30 minutes, and washed. Then, it was further immersed in 50 g of diamine (N,N,N',N'-tetramethyl-1,6-hexane diamine). After 24 hours, it was taken out, and washed; thereby the gas diffusion electrode was obtained. For this gas diffusion electrode, the ion-exchange capacity and the water content of the ion-conductive additive comprising the crosslinking structure, and the content ratio of the constituting unit comprising the quaternary base type anion-exchange group and the constituting unit comprising the crosslinking structure of the ion-conductive additive comprising the crosslinking structure were evaluated. The results are shown in Table 3. Also, using the obtained gas diffusion electrode, the electric power output test was carried out. The results are shown in Table 3.

**Example 17**

The membrane-electrode assembly was obtained as same as the example 16 except that the catalytic electrode layer was formed by forming the catalytic electrode precursor layer on the precursor of the ion-exchange membrane (the chloromethyl group content of 2.2 mmol/g, the membrane thickness of 25 μm, and the outer size of 40 mm square). For the obtained membrane-electrode assembly, the ion-exchange capacity and the water content of the ion-conductive additive comprising the crosslinking structure, and the content ratio of the constituent unit comprising the quaternary base type anion-exchange group and the constituent unit comprising the crosslinking structure of the ion-conductive additive comprising the crosslinking structure were evaluated. The results are shown in Table 3. Also, using the obtained membrane-electrode assembly, the electric power output test was carried out. The results are shown in Table 3.

**Comparative example 3**

0.8 g of poly(chloromethyl styrene) (the number average molecular weight 80,000) was dissolved in 0.15 g of tetrahydrofuran, then 1.6 g of catalyst (the platinum particle of the particle diameter of 2 to 10 nm being supported on the carbon particle having the primary particle diameter of 30 to 50 nm) was added and dispersed, followed by further adding 0.2 g of N,N,N',N'-tetramethyl-1,6-hexane diamine; thereby the catalytic electrode precursor composition was prepared. This was coated on the ion-exchange membrane (the anion-exchange capacity of 1.8 mmol/g, the water content at 25°C of 25 mass%, and the dry membrane thickness of 28 μm, the outer size of 40 mm square) so that the platinum was 0.5 $mgcm^{-2}$ in the size of 23 mm square (about 5 $cm^2$), then dried for 6 hours at 25°C. Then, thermocompression bonding was further carried out for 100 seconds under pressurized condition of 5 MPa pressure at 100°C using a heat press machine, and then left at a room temperature for 2 minutes; thereby the membrane-electrode assembly was obtained. For the obtained membrane-electrode assembly, the ion-exchange capacity and the water content, and the content ratio of the constituent unit comprising the quaternary base type anion-exchange group and the constituent

unit comprising the crosslinking structure of the ion-conductive additive comprising the crosslinking structure were evaluated. The results are shown in Table 3. Also, using the obtained membrane-electrode assembly, the electric power output test was carried out. The results are shown in Table 3.

**Comparative example 4**

0.8 g of poly(chloromethyl styrene) (the number average molecular weight 80,000) was dissolved in 0.15 g of tetrahydrofuran, then 1.6 g of catalyst (the platinum particle of the particle diameter of 2 to 10 nm being supported on the carbon particle having the primary particle diameter of 30 to 50 nm) was added and dispersed, followed by further adding 0.05 g of N,N,N',N'-tetramethyl-1,6-hexane diamine; thereby the catalytic electrode precursor composition was prepared. This was coated on the ion-exchange membrane (the chloromethyl group content of 2.2 mmol/g, the membrane thickness of 25 $\mu$m, the outer size of 40 mm square) so that the platinum was 0.5 $mgcm^{-2}$ in the size of 23 mm square (about 5 $cm^2$), then dried for 6 hours at 25°C. Then, thermocompression bonding was further carried out for 100 seconds under pressurized condition of 5 MPa pressure at 100°C using a heat press machine, and then left at a room temperature for 2 minutes. Further, in order to carry out the quaternizing treatment to the remaining haloalkyl group in the ion-exchange membrane and in the ion-conductive additive comprising the crosslinking structure, it was immersed in water-acetone mixture solution comprising 5 mass% of trimethylamine for 16 hours; thereby the membrane-electrode assembly was produced. For the obtained membrane-electrode assembly, the ion-exchange capacity and the water content of the ion-conductive additive comprising the crosslinking structure, and the content ratio of the constituent unit comprising the quaternary base type anion-exchange group and the constituent unit comprising the crosslinking structure of the ion-conductive additive comprising the crosslinking structure were evaluated. The results are shown in Table 3. Also, using the obtained membrane-electrode assembly, the electric power output test was carried out. The results are shown in Table 3.

**Comparative example 5**

1 g of chloromethylated polystyrene-poly(ethylene-butylene)-polystyrene triblock copolymer as same as the one obtained in the production step of the partially quaternized styrene-based copolymer 5 was dissolved in 100 ml chloroform, then 2 g of catalyst (the platinum particle of the particle diameter of 2 to 10 nm being supported on the carbon particle having the primary particle diameter of 30 to 50 nm) was added and dispersed, thereby the catalytic electrode forming composition was prepared. This was coated on the gas diffusion layer (the carbon paper TGPH-060, the thickness of 200 $\mu$m made by TORAY INDUSTRIES, INC) so that the platinum was 0.5 $mgcm^{-2}$ in the size of 23 mm square (about 5 $cm^2$), then dried; thereby the catalytic electrode precursor layer on the gas diffusion layer was obtained. The catalytic electrode precursor layer was immersed in 10 g of 20 mass% trimethylamine solution and 2.5 g of N,N,N',N'-tetra-1,6-hexane diamine mixture solution. After 24 hours, it was taken out, and washed; thereby the gas diffusion electrode was obtained. For this gas diffusion electrode, the ion-exchange capacity and the water content of the ion-conductive additive comprising the crosslinking structure, and the content ratio of the constituting unit comprising the quaternary base type anion-exchange group and the constituting unit comprising the crosslinking structure of the ion-conductive additive comprising the crosslinking structure were evaluated. The results are shown in Table 3. Also, using the obtained gas diffusion electrode, the electric power output test was carried out. The results are shown in Table 3.

Table 1

| Styrene-based copolymer | Structure of quaternary base type anion-exchange group in formula (1) [1)] | Content ratio of formula (1) in the polymer (mass%) | Structure of haloalkyl group formula (2)[1)] | Content ratio of formula (2) in the polymer (mass%) | Ion-exchange capacity mmol g-1 | Water containing ratio (%) |
|---|---|---|---|---|---|---|
| 1 | $Ph-CH_2N^+(CH_3)_3$ | 58 | $Ph-CH_2Cl$ | 42 | 2.8 | 73 |
| 2 | $Ph-CH_2N^+(CH_3)_3$ | 85 | $Ph-CH_2Cl$ | 15 | 4 | 95 |
| 3 | $Ph-CH_2N^+(CH_3)_2(C_4H_9)$ | 93 | $Ph-CH_2Cl$ | 7 | 3.7 | 63 |
| 4 | $Ph-(CH_2)_4N^+(CH_3)_3$ | 92 | $Ph-(CH_2)_4Br$ | 8 | 3.2 | 62 |
| 5 | $Ph-CH_2N^+(CH_3)_3$ | 42 | $Ph-CH_2Cl$ | 13 | 2 | 58 |

(continued)

| Styrene-based copolymer | Structure of quaternary base type anion-exchange group in formula (1) [1)] | Content ratio of formula (1) in the polymer (mass%) | Structure of haloalkyl group formula (2)[1)] | Content ratio of formula (2) in the polymer (mass%) | Ion-exchange capacity mmol g-1 | Water containing ratio (%) |
|---|---|---|---|---|---|---|
| 6 | $Ph-CH_2N^+(CH_3)_3$ | 52 | $Ph-CH_2Cl$ | 4 | 2.5 | 67 |
| 1) Ph shows the aromatic ring group in the styrene-based copolymer | | | | | | |

Table 2

| | Styrene-based copolymer | Diamine compounds used for crosslinking[1)] | Catalytic electrode layer to which was formed to | Structure formed |
|---|---|---|---|---|
| Example 1 | Copolymer 1 | TMBDA | Gas diffusion layer | Gas diffusion electrode |
| Example 2 | Copolymer 2 | same as above | Gas diffusion layer | Gas diffusion electrode |
| Example 3 | Copolymer 3 | same as above | Gas diffusion layer | Gas diffusion electrode |
| Example 4 | Copolymer 4 | same as above | Gas diffusion layer | Gas diffusion electrode |
| Example 5 | Copolymer 5 | same as above | Gas diffusion layer | Gas diffusion electrode |
| Example 6 | Copolymer 6 | same as above | Gas diffusion layer | Gas diffusion electrode |
| Example 7 | Copolymer 2 | TMHDA | Gas diffusion layer | Gas diffusion electrode |
| Example 8 | Copolymer 4 | same as above | Gas diffusion layer | Gas diffusion electrode |
| Example 9 | Copolymer 6 | same as above | Gas diffusion layer | Gas diffusion electrode |
| Example 10 | Copolymer 2 | same as above | Ion-exchange membrane | Membrane-electrode assembly |
| Example 11 | Copolymer 4 | same as above | Ion-exchange membrane | Membrane-electrode assembly |
| Example 12 | Copolymer 6 | same as above | Ion-exchange membrane | Membrane-electrode assembly |
| Example 13 | Copolymer 2 | same as above | Ion-exchange membrane precursor | Membrane-electrode assembly |
| Example 14 | Copolymer 4 | same as above | Ion-exchange membrane precursor | Membrane-electrode assembly |

(continued)

| | Styrene-based copolymer | Diamine compounds used for crosslinking[1)] | Catalytic electrode layer to which was formed to | Structure formed |
|---|---|---|---|---|
| Example 15 | Copolymer 6 | same as above | Ion-exchange membrane precursor | Membrane-electrode assembly |
| Comparative example 1 | poly(chloromethylstyrene) | TMBDA | Gas diffusion layer | Gas diffusion electrode |
| Comparative example 2 | poly(bromobutylstyrene) | same as above | Gas diffusion layer | Gas diffusion electrode |
| Example 16 | poly(chloromethylstyrene) | TMHDA | Gas diffusion layer | Gas diffusion electrode |
| Example 17 | poly(chloromethylstyrene) | same as above | Ion-exchange membrane precursor | Membrane-electrode assembly |
| Comparative example 3 | poly(chloromethylstyrene) | same as above | Ion-exchange membrane | Membrane-electrode assembly |
| Comparative example 4 | poly(chloromethylstyrene) | same as above | Ion-exchange membrane precursor | Membrane-electrode assembly |
| Comparative example 5 | chloromethylated SEBS [2)] | same as above | Gas diffusion layer | Gas diffusion electrode |
| 1) TMHDA =N, N, N', N'-tetramethyl-1,6-hexadiamine TMBDA = N, N, N', N'-tetramethyl-1,4-hexadiamine<br>2) polystyrene-poly(ethylene-butylene)-polystyrene triblock copolymer | | | | |

Table 3

| | Structure of quaternary base type anion-exchange group in formula (1)[1)] | Content ratio of formula (1) in the polymer (mass%) | Crosslinking structure in formula (3)[2)] | Content ratio of formula (3) in the polymer (mass%) | Ion-exchange capacity mmol g-1 | Water containing ratio (%) | Cell voltage (V) | Cell resistance (Ω $cm^2$) |
|---|---|---|---|---|---|---|---|---|
| Example 1 | $Ph-CH_2N^+(CH_3)_3$ | 48 | Crosslinking structure 1 | 52 | 4.6 | 87 | 0.46 | 103 |
| Example 2 | $Ph-CH_2N^+(CH_3)_3$ | 79 | Crosslinking structure 1 | 21 | 4.7 | 102 | 0.50 | 99 |
| Example 3 | $Ph-CH_2N^+(CH_3)_2(C_4H_9)$ | 91 | Crosslinking structure 1 | 9 | 3.7 | 76 | 0.41 | 111 |
| Example 4 | $Ph-(CH_2)_4N^+(CH_3)_3$ | 90 | Crosslinking structure 2 | 10 | 3.4 | 73 | 0.43 | 113 |
| Example 5 | $Ph-CH_2N^+(CH_3)_3$ | 39 | Crosslinking structure 1 | 18 | 2.7 | 66 | 0.46 | 104 |
| Example 6 | $Ph-CH_2N^+(CH_3)_3$ | 51 | Crosslinking structure 1 | 6 | 2.7 | 70 | 0.47 | 102 |
| Example 7 | $Ph-CH_2N^+(CH_3)_3$ | 78 | Crosslinking structure 3 | 22 | 4.4 | 99 | 0.49 | 100 |
| Example 8 | $Ph-(CH_2)_4N^+(CH_3)_3$ | 89 | Crosslinking structure 4 | 11 | 3.4 | 71 | 0.42 | 115 |
| Example 9 | $Ph-CH_2N^+(CH_3)_3$ | 51 | Crosslinking structure 3 | 6 | 2.7 | 68 | 0.46 | 103 |
| Example 10 | $Ph-CH_2N^+(CH_3)_3$ | 78 | Crosslinking structure 3 | 22 | 4.4 | 98 | 0.49 | 99 |
| Example 11 | $Ph-(CH_2)_4N^+(CH_3)_3$ | 89 | Crosslinking structure 4 | 11 | 3.4 | 72 | 0.42 | 114 |
| Example 12 | $Ph-CH_2N^+(CH_3)_3$ | 51 | Crosslinking structure 3 | 6 | 2.7 | 69 | 0.46 | 102 |
| Example 13 | $Ph-CH_2N^+(CH_3)_3$ | 78 | Crosslinking structure 3 | 22 | 4.4 | 99 | 0.45 | 120 |
| Example 14 | $Ph-(CH_2)_4N^+(CH_3)_3$ | 89 | Crosslinking structure 4 | 11 | 3.4 | 69 | 0.40 | 122 |

(continued)

| | Structure of quaternary base type anion-exchange group in formula (1)[1)] | Content ratio of formula (1) in the polymer (mass%) | Crosslinking structure in formula (3)[2)] | Content ratio of formula (3) in the polymer (mass%) | Ion-exchange capacity mmol g-1 | Water containing ratio (%) | Cell voltage (V) | Cell resistance ($\Omega$ $cm^2$) |
|---|---|---|---|---|---|---|---|---|
| Example 15 | Ph-$CH_2N^+(CH_3)_3$ | 51 | Crosslinking structure 3 | 6 | 2.7 | 70 | 0.42 | 126 |
| Comparative example 1 | - | 0 | Crosslinking structure 1 | 32 | 3.8 | 54 | 0.19 | 142 |
| Comparative example 2 | - | 0 | Crosslinking structure 2 | 33 | 4.0 | 46 | 0.22 | 170 |
| Example 16 | Ph-$CH_2N^+(CH_3)_3$ | 82 | Crosslinking structure 3 | 18 | 4.5 | 99 | 0.31 | 102 |
| Example 17 | Ph-$CH_2N^+(CH_3)_3$ | 80 | Crosslinking structure 3 | 20 | 4.5 | 96 | 0.28 | 113 |
| Comparative example 3 | - | - | Crosslinking structure 3 | 23 | 2.3 | 23 | 0.25 | 130 |
| Comparative example 4 | Ph-$CH_2N^+(CH_3)_3$ | 40 | Crosslinking structure 3 | 23 | 3.2 | 55 | 0.27 | 115 |
| Comparative example 5 | Ph-$CH_2N^+(CH_3)_3$ | 31 | Crosslinking structure 3 | 16 | 2.6 | 68 | 0.22 | 98 |

1) Ph shows the aromatic ring group in the styrene-based copolymer
2) Crosslinking structure 1 Ph-$CH_2N^+(CH_3)_2$-$(CH_2)_4$-$N^+(CH_3)_2CH_2$-Ph
Crosslinking structure 2 Ph-$(CH_2)_4N^+(CH_3)_2$-$(CH_2)_4$-$N^+(CH_3)_2(CH_2)_4$-Ph
Crosslinking structure 3 Ph-$CH_2N^+(CH_3)_2$-$(CH_2)_6$-$N^+(CH_3)_2CH_2$-Ph
Crosslinking structure 4 Ph-$(CH_2)_4N^+(CH_3)_2$-$(CH_2)_6$-$N^+(CH_3)_2(CH_2)_4$-Ph

From the results of these examples 1 to 15, the following facts were confirmed.

The excellent fuel cell output characteristics can be obtained by first forming the catalytic electrode precursor layer using the partially quaternized styrene-based copolymer which comprises the constituent unit comprising the quaternary base type anion-exchange group and the constituent group comprising the haloalkyl group, and then forming the catalytic electrode layer including the ion-conductive additive comprising the crosslinking structure by polyamine compounds such as diamine compounds.

Further, according to the present invention such effects can be effectively obtained even in case the gas diffusion electrode layer is formed by forming the catalytic electrode layer on the gas diffusion layer, or in case the membrane-electrode assembly is formed by forming the catalytic electrode layer on the ion-exchange membrane or on the precursor thereof.

As shown in the comparative examples 1 and 2, in case the polymer which does not comprise the quaternary base type anion-exchange group was used for forming the catalytic electrode precursor layer, the ion-conductive additive comprising the crosslinking structure obtained after the crosslinking by the polyamine compound becomes excessively crosslinked, thus it shows low ionic conductivity and low gas permeability. Hence the electrode catalyst activity was deteriorated. As a result, the fuel cell output characteristics were very limited. That is, in case of forming the catalytic electrode layer by using the quaternized styrene-based copolymer comprising a quaternary base type anion-exchange group according to the present invention crosslinked with polyamine compounds, the degree of crosslinking of ion-conductive additive comprising the crosslinked structure included in the catalytic electrode layer was equal or lower than a certain amount, thus high ionic-conductivity and gas permeability were exhibited, and showed high activity of the electrode catalyst. As a result, the high fuel cell output characteristics can be obtained.

Also, as shown by the examples 16 and 17, in case the quaternary base type anion-exchange group introduction and the crosslinking by the polyamine were carried out in step wise manner after the catalytic electrode precursor layer was produced using the polymer which does not comprise the quaternary base type anion-exchange group in order to lower the degree of crosslinking of the ion-conductive additive comprising the crosslinked structure, the characteristic of the ion-conductive additive itself was similar to that of the examples 1 to 15, and the ion-exchange capacity and the water content were also about the same as that of the examples 1 to 15. However, in the examples 16 and 17, the quaternization is carried out after the catalytic electrode precursor layer is formed, thus the volume is increased because the quaternizing agent was introduced to the catalytic electrode layer later on, and also showed significant swelling of the ion-conductive additive because the ion-exchange group was introduced by hydration. Hence it is speculated that the electron conduction pathway and fine pore structures formed in the precursor state of the catalytic electrode layer were broken, and the fine pores were filled due to the swollen ion-conductive additive. As a result, the performance of the catalytic electrode layer was slightly lowered, and in regards with the cell voltage, the fuel cell output characteristic was slightly lowered compared to that of examples 1 to 15, however these were better than the comparative examples.

As shown by the examples 1 to 15, when the crosslinking was carried out after forming the catalytic electrode precursor layer using the partially quaternized styrene-based copolymer, the quaternary base type anion-exchange group introduced during the crosslinking can be equal or lower than the certain amount, and the swelling of the ion-conductive additive can be suppressed to extremely low level. Therefore, excellent performance of the catalytic electrode layer and excellent fuel cell output characteristics can be obtained. On the other hand, as shown by the examples 16 and 17, when the quaternization was carried out after forming the catalytic electrode precursor layer using chloromethylated polystyrene, the electron conduction pathway and fine pore structures may be broken due to the introduction of the quaternizing agent, hence the cell performance was slightly lowered. As a result, it was verified that it is extremely effective from the point of improving the cell characteristics to carry out the crosslinking by the polyamine compound (the post-crosslinking) after the catalytic electrode precursor layer is formed using the partially quaternized styrene-based copolymer.

## REFERENCES OF THE NUMERALS

1; Battery separator
2; Fuel flow channel
3; Oxidant flow channel
4; Anode chamber side gas diffusion layer
5; Anode chamber side catalytic electrode layer
6; Cathode chamber side gas diffusion layer
7; Cathode chamber side catalytic electrode layer
8; Solid polymer electrolytes (anion-exchange membrane)
9; Anode chamber

10; Cathode chamber

## Claims

1. A partially quaternized styrene-based copolymer **characterized by** comprising

a constituent unit comprising a quaternary base type anion-exchange group shown in below formula (1)

[Chemical formula 1]

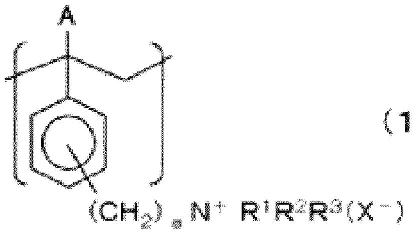

(1)

(note that, "A" is hydrogen or methyl group, "a" is an integer of 1 to 8, R1 and R2 are methyl group or ethyl group, and R3 is a linear alkyl group having a carbon atoms of 1 to 8. X- is one or two or more of counter ions selected from the group consisting of OH-, HCO3-, CO32-, Cl-, Br- and I-.), and
a constituent group comprising haloalkyl group shown in below formula (2)

[Chemical formula 2]

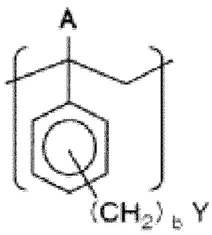

(2)

(note that, "A" is hydrogen or methyl group, "b" is an integer of 1 to 8, and "Y" is halogen atom and it is any one of Cl, Br, and I); wherein
a content ratio of the constituent unit shown in the formula (1) is 10 to 99 mass%, and
a content ratio of the constituent unit shown in the formula (2) is 1 to 70 mass%.

2. An ion-conductive additive comprising the partially quaternized styrene-based copolymer as set forth in claim 1 which is for a catalytic electrode layer used in an anion-exchange membrane type fuel cell.

3. A catalytic electrode layer for an anion-exchange membrane type fuel cell, wherein the catalytic electrode layer comprising an electrode catalyst and an ion-conductive additive, **characterized in that**

said ion-conductive additive comprises a constituent unit comprising a quaternary base type anion-exchange group shown in below formula (1)

[Chemical formula 3]

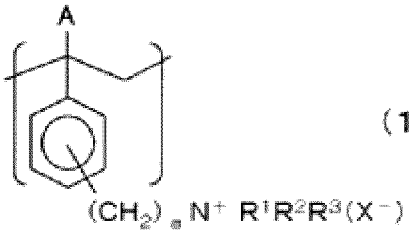

(1)

(note that, "A" is hydrogen or methyl group, "a" is an integer of 1 to 8, R1 and R2 are methyl group or ethyl group, and R3 is a linear alkyl group having a carbon atoms of 1 to 8. X- is one or two or more of counter ions selected from the group consisting of OH-, HCO3-, CO32-, Cl-, Br- and I-.), and

a constituent unit comprising a crosslinking structure shown in below formula (3)

[Chemical formula 4]

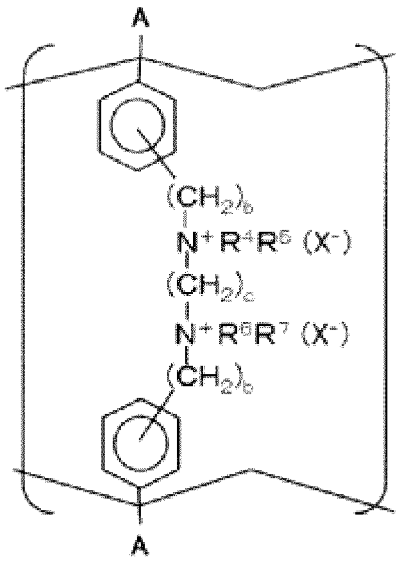

(3)

(note that, "b" is an integer of 1 to 8, "c" is an integer of 2 to 8, R4, R5, R6 and R7 are selected from the group consisting of hydrogen, methyl group, or ethyl group. X- is one or two or more of counter ions selected from the group consisting of OH-, HCO3-, CO32-, Cl-, Brand I-.), wherein

a content ratio of the constituent unit shown in the formula (1) is 10 to 95 mass%, and

a content ratio of the constituent unit shown in the formula (3) is 0.1 to 70 mass%; and

said catalytic electrode layer for anion-exchange membrane type fuel cell is obtained by coating and drying a catalytic electrode forming composition comprising a catalyst and the ion-conductive additive as set forth in claim 2, on an anion-exchange membrane, a precursor of the anion-exchange membrane or a gas diffusion layer to form a catalytic electrode precursor layer, then carrying out a quaternization and crosslinking reaction by contacting with a polyamine compound.

**4.** A membrane-electrode assembly for the anion-exchange membrane type fuel cell comprising the catalytic electrode layer for the anion-exchange membrane type fuel cell as set forth in claim 3.

**5.** A gas diffusion electrode for the anion-exchange membrane type fuel cell comprising the catalytic electrode layer for the anion-exchange membrane type fuel cell as set forth in claim 3.

**6.** An anion-exchange membrane type fuel cell comprising the membrane-electrode assembly for the anion-exchange

membrane type fuel cell as set forth in claim 4.

**7.** An anion-exchange membrane type fuel cell comprising the gas diffusion electrode for the anion-exchange membrane type fuel cell as set forth in claim 5.

**8.** A production method of a membrane-electrode assembly for an anion-exchange membrane type fuel cell comprising the steps of coating and drying a catalytic electrode forming composition comprising a catalyst and the ion-conductive additive for the catalytic electrode layer as set forth in claim 2, on an anion-exchange membrane or a precursor of the anion-exchange membrane to form a catalytic electrode precursor layer, then carrying out a quaternization and crosslinking reaction by contacting with a polyamine compound.

**9.** A production method of a gas diffusion electrode for an anion-exchange membrane type fuel cell comprising the steps of coating and drying a catalytic electrode forming composition comprising a catalyst and the ion-conductive additive as set forth in claim 2, on a gas diffusion layer to form a catalytic electrode precursor layer, then carrying out a quaternization and crosslinking reaction by contacting with a polyamine compound.

FIG. 1

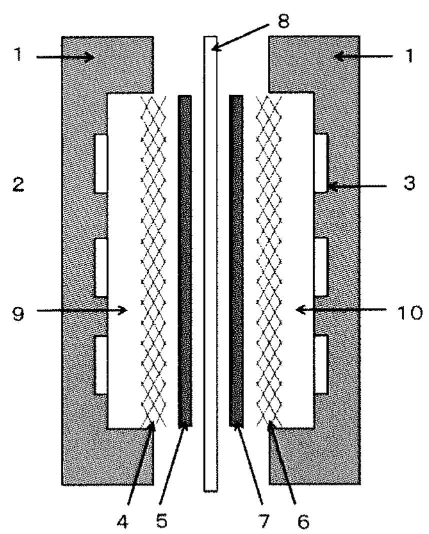

**INTERNATIONAL SEARCH REPORT**

International application No. PCT/JP2015/052990

A. CLASSIFICATION OF SUBJECT MATTER

*C08F8/32*(2006.01)i, *C08F8/18*(2006.01)i, *C08F212/14*(2006.01)i, *H01B1/06*(2006.01)i, *H01M4/86*(2006.01)i, *H01M4/88*(2006.01)i, *H01M8/02*(2006.01)i, *H01M8/10*(2006.01)i, *C08J5/22*(2006.01)n

According to International Patent Classification (IPC) or to both national classification and IPC

B. FIELDS SEARCHED

Minimum documentation searched (classification system followed by classification symbols)

C08F8/32, C08F8/18, C08F212/14, H01B1/06, H01M4/86, H01M4/88, H01M8/02, H01M8/10, C08J5/22

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2013/129478 A1 (Tokuyama Corp.),<br>09 June 2013 (09.06.2013),<br>claims; paragraphs [0062] to [0063], [0070], [0111] to [0140]<br>& EP 2822070 A1 & CN 104081569 A | 1,2<br>3-9 |
| X<br>A | JP 2000-290829 A (Mitsubishi Chemical Corp.),<br>17 October 2000 (17.10.2000),<br>claims<br>(Family: none) | 1<br>2-9 |
| X<br>A | JP 2000-212306 A (Mitsubishi Chemical Corp.),<br>02 August 2000 (02.08.2000),<br>claims<br>(Family: none) | 1<br>2-9 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 18 March 2015 (18.03.15) | 31 March 2015 (31.03.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/052990

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 06-336509 A (Eiken Chemical Co., Ltd.), 06 December 1994 (06.12.1994), claims (Family: none) | 1<br>2-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003086193 A
- WO 2007072842 A
- WO 2013129478 A